# EUROPEAN PATENT APPLICATION

(11) **EP 4 102 063 A1**
(43) Date of publication of application: **14.12.2022**
(21) Application number: 22177844.2
(22) Date of filing: 08.06.2022
(51) Int. Cl.: F03D 13/25, B66C 23/20, F03D 13/40, F03D 80/50

(54) **OFFSHORE WIND TURBINE COMPRISING A PLATFORM WITH ATTACHED EQUIPMENT CONTAINER**

(30) Priority: 10.06.2021 DK PA202170297
(71) Applicant: Vattenfall AB, 169 79 Solna (SE)
(72) Inventor: CHRISTIANSEN, Anders Noer, 6000 Kolding (DK)
(74) Representative: Zacco Denmark A/S

(57) **Abstract**

The present disclosure relates to an offshore wind turbine (1) comprising a nacelle (2), a tower (3) and a foundation arrangement (4), wherein the offshore wind turbine (1) comprises a platform arrangement (5) placed below the nacelle (2). The platform arrangement (5) is structurally fixed to a structure (3, 4) of the wind turbine by means of one or more platform connection arrangements (13). The platform arrangement (5) comprises a first proximate side (17c) proximate the wind turbine structure (3, 4) and a second distal side (17d) arranged distal to the wind turbine structure, and platform sides (17a, 17b) extending from said distal side (17d) to said proximate side (17c). One or more attached equipment containers (401, 402) is detachably suspended at a support frame arrangement (7) of the platform arrangement (5) by means of a container connection arrangement (410, 411) so that the equipment container (401, 402) hangs at one of said platform sides (17a, 17b) of the platform arrangement (5). The equipment container (401, 402) comprises a first side wall (440) facing away from the platform arrangement (5), and a second side wall (430) facing the platform arrangement (5), and an access opening (420) in the equipment container is placed in the second side wall (430).

## Description

The present disclosure relates to an offshore wind turbine, and a method of adapting a platform arrangement at an offshore wind turbine with one or more equipment containers.

### Background

Offshore wind turbines generally provides several advantages over e.g. land based wind turbines. Moreover the performance of wind turbines, including offshore wind turbines, has increased, and will most likely increase in the future, hence making offshore wind turbines relevant as a lucrative and economically feasible renewable power source, also in the future.

Offshore wind turbines are however more demanding to access when the wind turbine is installed and/or if service at the wind turbine is needed or scheduled, as it may be accessed by a vessel such as a marine vessel, such as a boat. Generally, different ways of accessing an offshore wind turbine from a marine vessel are known. Patent document WO 2019/145226 A1 discloses a platform comprising a davit crane arranged at a platform of an offshore wind turbine. EP2511525 A2 discloses a platform where containers are placed on a floor of the platform.

The above mentioned solutions suffers from drawbacks such as being cost expensive, complex and/or space consuming. The present disclosure may help to solve or reduce one or more of the above mentioned drawbacks. Additionally or alternatively, the present disclosure may provide a solution that may help to improve offshore working environment.

### Summary

The present disclosure relates, according to a first aspect, to an offshore wind turbine comprising a nacelle, a tower and a foundation arrangement, wherein the offshore wind turbine comprises a platform arrangement placed below the nacelle. The platform arrangement is structurally fixed to a structure of the wind turbine by means of one or more platform connection arrangements, and the platform arrangement comprises a floor comprising an upwardly facing floor surface for support of personnel on the platform arrangement. The platform arrangement comprises a first proximate side proximate the wind turbine structure and a second distal side arranged distal to the wind turbine structure, and platform sides extending from said distal side to said proximate side. One or more attached equipment containers is detachably suspended at a support frame arrangement of the platform arrangement by means of a container connection arrangement so that the equipment container hangs at one of said platform sides of the platform arrangement. The equipment container comprises a first side wall facing away from the platform arrangement, and a second side wall facing the platform arrangement, and an access opening in the equipment container is placed in the second side wall.

This provides a cost-efficient and easy adaptable solution where a platform, such as a service platform, attached to the wind turbine above the sea level and below the nacelle, may be used for various purposes.

Additionally or alternatively it may provide a space saving solution where a reduced part, such as substantially no part, of the platform floor used by /for use by personnel during normal operation may be occupied by one or more equipment containers.

The present disclosure may hence e.g. provide a cost-efficient and easily adaptable solution where a platform, such as a service platform, attached to the wind turbine above the sea level and below the nacelle, that may be used for various purposes.

As the equipment container(s) is/are attached at the sides of the platform, easy access is provided from the platform. Personnel may hence enter the platform at a platform entrance provided e.g. at the second distal side arranged distal to the wind turbine structure, e.g. by means of a crane arrangement of the platform or the like. Then the personnel may enter the equipment container(s) from the platform floor through the access opening in the equipment container placed in the second side wall.

The opening in the equipment container may be a door opening so that a person can leave from the platform floor and enter the container interior while the container is suspended from the platform support frame, or a smaller hatch opening providing access to the interior of the container, such as components in the container interior.

The equipment container may be connected to a side part of the support frame arrangement that is placed proximate a platform side extending from the distal side to the proximate side.

In one or more embodiments of the present disclosure, said container connection arrangement may comprise one or more hook shaped connectors at the equipment container which engages with one or more engagement parts at the support frame arrangement.

This may be a mechanically simple and cost efficient solution that may allow for easy installation of the equipment container(s).

Further safety measures such as a locking system may be installed and/or activated after the equipment container is attached to at the platform, to assure that the container cannot be removed from the platform by waves, or accident. The locking system may then be removed or deactivated if/when the container is to be moved again from the platform.

Said container connection arrangement may in some embodiments of the present disclosure comprise a sleeve with an opening for receiving an upwardly or downwardly facing part such as a hook shaped connector.

In one or more embodiments of the present disclosure, said container connection arrangement may comprise one or more hook shaped connectors at the support frame arrangement which engages with one or more engagement parts at the equipment container.

In one or more embodiments of the present disclosure, said one or more engagement parts comprises one or more engagement beams, such as horizontal engagement beams.

This may e.g. be advantageous from an installation point of view as it may allow an easy adaptable installation process when installing the container, and/or an easily adaptable solution when removing the container. Also it may be a cost efficient solution.

In one or more embodiments of the present disclosure, said container connection arrangement may be configured so that a lifting force acting on and lifting the attached equipment container upwards will detach the attached equipment container from the support frame arrangement.

Hence, gravity will help to keep the container in place at the support frame arrangement.

This provides easy detachment and/or installation of the equipment container.

Additionally or alternatively, said container connection arrangement may be configured so that lowering a lifted equipment container that is not yet connected to a side of the support frame arrangement from an upper position will provide that parts of the container connection arrangement engages so that the lifted equipment container is attached to the from the support frame arrangement.

A safety measure, such as a releasable locking system, may in embodiments be configured to prevent that the container can unintentionally be lifted from the platform.

In one or more embodiments of the present disclosure, the one or more equipment containers is/are attached by means of the container connection arrangement to the support frame arrangement at a level above the level of the floor plane of the platform floor.

This may help to provide a safe and cost efficient attachment of the respective equipment container to the platform.

In one or more embodiments of the present disclosure, the support frame extends above a level of a floor plane defined by the floor structure.

In one or more embodiments of the present disclosure, said support frame arrangement may comprise support legs, such as vertical support legs, arranged at each of said platform sides extending from the distal side to said proximate side of the platform arrangement. The support legs may in one or more further embodiments of the present disclosure be interconnected by means of one or more transverse support beams extending above the platform floor between said sides of the platform arrangement. In other embodiments, the transverse support beams may be omitted.

This may provide a cost efficient solution with an improved strength and/or help to facilitate platform adaptability.

The support legs may directly or indirectly be interconnected by the one or more transverse support beam. For example, in case of indirect connection, the transverse support beam(s) may be connected to horizontal interconnecting part(s), such as a girder, that extends along said platform sides and interconnects several legs at the respective platform side, for example at upper portions of the support frame. In case of direct connection, this may be provided by directly interconnecting e.g. two opposing legs arranged at each their platform side with a transverse support beam.

In one or more embodiments of the present disclosure, the platform arrangement comprises a service crane arrangement. This may comprise a crane arrangement as mentioned below and/or a davit crane. If the crane arrangement comprises a davit crane, the davit crane may be placed at e.g. the platform floor and be supported at/by the floor structure of the platform.

In one or more embodiments of the present disclosure, the platform arrangement comprises a service crane arrangement, wherein one or more crane booms of the service crane arrangement is/are suspended substantially horizontally from one or more support beams of said support frame arrangement, such as said transverse support beams, at a distance above the upwardly facing floor surface, and wherein the crane boom comprises a first, proximate boom part arranged proximate the structure of the wind turbine, and a second, distal boom part extending out over an outer edge of the service platform floor at said second distal side.

The crane arrangement provides a cost efficient solution and/or may additionally or alternatively be easy to maintain.

Moreover, providing that the crane boom(s) and equipment container(s) are connected to a common frame structure of the platform arrangement that carries both the loads lifted by the crane arrangement and the loads of the equipment container provides a cost efficient, integrated and/or adaptable platform solution.

The crane boom(s) may in embodiments of the present disclosure be unmovably attached to or movably/displaceably (such as slideably) attached to the one or more support beams.

In one or more embodiments of the present disclosure, the service crane arrangement may comprise one or more of :
- a crane trolley configured to be displaced along a track in the longitudinal direction of the crane boom by means of a drive arrangement,
- a flexible lifting medium such as a wire, rope or chain,
- a winch for winding and unwinding the flexible lifting medium and a drive unit for driving the winch.

In one or more further embodiments, the flexible lifting medium may be connected to the crane trolley and a connection part suspended, so that the connection part is suspended from the crane trolley, wherein the winch is controllable so as to lift and lower the connection part between an upper position located above a floor plane defined by the upper floor surface, and a lower position placed below the floor plane in order to allow loading or unload service equipment and/or personnel connected to the connection part onto or from a marine vessel when the crane trolley is placed at said second, distal boom part, and wherein the winch is controllable so as to lift and lower the connection part to load and/or unload said equipment and/or personnel onto or from the service platform floor when the crane trolley (is placed at said first proximate boom part.

This provides a cost efficient crane solution that may be more easy to maintain and may allow an enhanced operation range of the crane arrangement. Additionally or alternatively, the crane arrangement may help to improve the general working environment at the wind turbine during e.g. service.

The personnel and/or equipment lifted by the crane arrangement can hence enter the equipment container(s) from the platform, and/or may enter the wind turbine interior in case a door opening in the wind turbine such as in tower or foundation arrangement can be entered from the platform.

In one or more embodiments of the present disclosure, the crane arrangement may comprise a first crane boom and a second crane boom, wherein the first and second crane booms are spaced apart to provide a distance there between,
wherein a first crane trolley is configured to be displaced along a track in the longitudinal direction of the first crane boom, and wherein a first flexible lifting medium is connected to the first crane trolley and a connection part, so that the connection part is suspended from the first crane trolley, and
wherein a second crane trolley is configured to be displaced along a track in the longitudinal direction of the second crane boom, and wherein a second,
   flexible lifting medium is connected to the second crane trolley and a connection part, so that the connection part is suspended from the second crane trolley. This may help to provide a solution that may be flexible in use and/or help to provide a more safe solution as one boom may be used for lifting personnel and the other boom may be used for equipment

In further embodiments of the present disclosure, a first winch may be configured to wind and unwind the first flexible lifting medium, and a second winch may be configured to wind and unwind the second lifting medium, such as wherein the first and second winch are configured to be operated independently of each other by means of a control system.

In one or more embodiments of the present disclosure, a first equipment container may be attached at a first side of the platform arrangement, and a second equipment container may be attached at a second, opposing side of the platform arrangement so that both the first and second equipment containers are suspended from said support frame arrangement.

This may provide that different equipment containers providing/supporting different application may be installed at the same platform.

In one or more embodiments of the present disclosure, said first and second equipment containers may be attached to a common frame arrangement of the platform arrangement, where the common frame arrangement is arranged above the level of the floor plane of the platform floor, is supported by the platform structure, and comprises support beams above the level of the floor plane that interconnects side parts of the common frame arrangement arranged at opposing sides of the frame arrangement.

This may provide e.g. improved balancing of forces.

In one or more embodiments of the present disclosure, the platform arrangement provides a service platform/working platform below the wind turbine nacelle/tower top and above sea level, where the platform arrangement has a floor surface, such as a flat floor surface, where service personnel can go, stand and/or work. Such a service platform may also be known as a working platform.

In one or more embodiments of the present disclosure, the platform floor may be aligned with a door entrance of the wind turbine, such as a door entrance in the tower or foundation arrangement, to enable access to the interior of the wind turbine.

Hence, the platform arrangement may be considered a working platform for use during service and maintenance of the wind turbine such as maintenance of components in the wind turbine nacelle, tower and/or foundation arrangement.

The one or more attached equipment containers detachably connected to the platform arrangement provides that a crew/service personnel may add and adapt the platform according to a preferred usage and tasks to be performed. Hence, different types of containers may be added or replaced dependent of the service to be conducted at the wind turbine. For example, minor service tasks may merely require e.g. a spare part container to be installed temporarily. Other tasks may require work/time to an extent where a further container such as e.g. a living and/or accommodation container and/or a lavatory container.

It is however understood that in some embodiments of the present disclosure, the platform arrangement may be placed at another location than opposite to/aligned with the/a mdoor entrance of the wind turbine. For example, the platform may be a service/working platform that is placed at another location of the wind turbine tower or foundation arrangement with the purpose of supporting one or more equipment containers. For example a lavatory container, a living and accommodation container, a fuel container, an electrolyser system and/or the like may be arranged at an equipment container supported by such a platform arrangement. Hence, the platform may be a service platform/working platform for providing access to the interior of the equipment container(s) that is supported by the platform, without necessarily providing access to the wind turbine through a door opening.

In one or more embodiments of the present disclosure, said one or more attached equipment containers comprises one or more service containers.

This may help to provide an enhanced working environment for service personnel and/or improved working efficiency, such as in in a cost efficient way.

In one or more embodiments of the present disclosure, one or more service container(s), may be transported between different wind turbines of an offshore windpark, and be installed at platform arrangements at the wind turbines of the wind park during a service trip, between two shore/harbour visits.

In one or more embodiments of the present disclosure, one or more service container(s) may be maintained at the same wind turbine of an offshore wind park during a service trip, and used during a service trip where different wind turbines are to be serviced.

In one or more embodiments of the present disclosure, the one or more service containers may comprise a lavatory container,

A lavatory provides enhanced working environment for e.g. service personnel. Additionally the detachable connection may provide several advantages as the lavatory container may e.g. be prepared, emptied, cleaned and the like at shore, and then transported to the wind turbine site(s) where it is to be installed.

In one or more embodiments of the present disclosure, the one or more service containers comprises a living and/or accommodation container.

A living and/or accommodation container may be advantageous as service personnel may need or want to be at the wind turbine site for several days. Allowing living and/or accommodation at a wind turbine and providing facilities therefore may provide improved working environment, and/or help to increase working efficiency. The living and/or accommodation container that may be attached and detached to a relevant platform arrangement may provide a cost efficient solution for improved working environment and/or efficiency.

In one or more embodiments of the present disclosure, said lavatory container, and said living and/or accommodation container may be provided by the same equipment container comprising bot facilities/features. In other embodiments, the lavatory container and the living and/or accommodation container may be separate equipment containers.

It is generally to be understood that in one or more embodiments of the present disclosure, one or more of the equipment containers may comprise a power supply arrangement.

In one or more embodiments of the present disclosure the one or more service containers may comprise a spare part container comprising a plurality of spare parts for use at the wind turbine to which the platform arrangement is attached.

This may improve efficiency and/or working environment for personnel that are about to provide a service task.

In one or more embodiments of the present disclosure, said one or more service containers may comprise a workshop container, such as comprising one or more electrical tools. The tools may e.g. comprise hand tools and/or the like. In one or more embodiments of the present disclosure, said tools may be installed in and/or attached to the workshop container.

Hence, advantageous repairing and/or service may be facilitated in an enhanced working environment and/or help to improve service efficiency.

In one or more embodiments of the present disclosure, said one or more attached equipment containers may comprise a hydrogen production arrangement configured to produce hydrogen by means of electric power generated by the offshore wind turbine to which the platform arrangement is attached,

In one or more embodiments of the present disclosure, said one or more attached equipment containers may comprise a hydrogen storage configured to store hydrogen produced at the location of the wind turbine to which the platform arrangement is attached.

This may enable a cost-efficient and adaptable solution for generating and/or storing hydrogen. It may additionally or alternatively help to provide a solution where service of hydrogen production or storage related equipment and/or replacement of hydrogen production or storage related equipment may be more easy.

In some embodiments, a vessel may simply bring a new/other hydrogen storage or hydrogen production container, and hence replace this with the existing container at a platform. Then the replaced container may detached from the platform arrangement and be brought to shore for repairs, upgrade and/or service, at least if a proper service cannot be performed from the platform itself by means of the access opening(s) of the container.

In one or more embodiments of the present disclosure, the hydrogen storage may be used as filling station for e.g. marine vessels used during for example service and maintenance of the wind turbines or other nearby wind turbines, or it may be used as fuel other vessels.

In one or more embodiments of the present disclosure, said one or more attached equipment containers may comprise fuel cells for converting stored hydrogen into electricity. The generated electricity may in further embodiments be utilized by equipment in other equipment containers or in the same container, or may alternatively be transmitted through a cable to an onshore utility grid.

In one or more embodiments of the present disclosure, said one or more attached equipment containers comprises a data centre container configured to provide computer processing by means of electric power generated by the offshore wind turbine to which the platform arrangement is attached.

This may enable a cost-efficient and efficient way of providing data processing power. It may additionally or alternatively help to provide a solution where service of the data centre and/or replacement of the data centre may be more easy. It is here understood that the datacentre may comprise one or more data connection interfaces to be connected to a data communication medium such as wireless data communication, wired data communication (such as optical cable, coaxial cable or the like) for enabling receipt of data processing requests at the data centre and/or transmitting processed data from the data centre.

It is understood that the equipment container(s) may comprise an interior with equipment, such as preinstalled equipment, for use at the wind turbine site.

In one or more embodiments of the present disclosure, said one or more attached equipment containers comprises a generator system, or parts of a generator, for providing electric power, such as for use during installation of the wind turbine and/or for power supply during service at the wind turbine.

Larger capacity generators may be desired or needed during installation and/or maintenance at the wind turbine. The generator, or generator parts at the equipment container provides electric power to the desired equipment, and may easily be installed at the platform arrangement before use and/or subsequently removed from the platform arrangement after use.

In embodiments of the present disclosure, a single equipment container may be installed at the platform and constitute a "plug and play" generator with electric outlet(s).In other embodiments of the present disclosure, generator equipment in several installed, separate equipment containers may be interconnected at the platform to constitute an overall generator system. In some embodiments of the present disclosure, fuel for the generator(s) may be provided in a fuel tank of the same equipment container or at a separate equipment container.

In one or more embodiments of the present disclosure, the platform arrangement has a maximum width extending horizontally and in a direction transverse to the longitudinal direction of the tower wherein the maximum width of the platform arrangement is smaller than the width, such as smaller than the diameter, of the tower and/or foundation arrangement, at least at the location opposite to the platform arrangement.

This may provide a cost efficient solution with improved space for equipment containers if needed. The maximum width of the platform may be determined between opposing side edges of a floor structure of the platform.

In one or more embodiments of the present disclosure, the total width of the platform arrangement and one or more equipment containers attached thereto is at least 10%, such as at least 30%, for example at least 50% larger than the maximum width of the platform arrangement.

In one or more embodiments of the present disclosure, the service platform may be configured to carry a rated, certified total external weight, such as provided by personnel and/or equipment, of no more than 8 ton, such as no more than 5 ton, such as no more than 3 ton.

In one or more embodiments of the present disclosure, the platform arrangement comprises a railing arranged at a side of the platform, wherein the railing comprises a railing gate arrangement that is openable in order to allow access to the attached equipment containers through the opening in the attached equipment container.

The railing provides a safety precaution in case the platform is entered when a container is not installed, as in some service situations, containers may not be needed or desired. When/if a service container is installed, then the railing gate can be opened to allow access to the container.

In one or more embodiments of the present disclosure, the platform arrangement may be structurally fixed, such as mainly structurally fixed, to the foundation arrangement below the wind turbine tower by means of one or a plurality of platform connection arrangements.

This may e.g. provide a more cost efficient wind turbine as the tower structure, such as a tubular metal tower structure, may not need to carry the platform weight, at least on it's own. Loads from a service platform acting on the tower and having a force component transverse to the longitudinal direction of the tower may additionally be reduced or omitted if the platform is mainly supported by the foundation arrangement.

The platform connection arrangement(s) may in one or more embodiments of the present disclosure be configured to carry at least 70%, such as at least 80%, e.g. at least 95% of the overall weight of the service platform and loads such as the equipment and/or personnel when handled by the service crane arrangement and/or supporting on the platform floor.

This may e.g. provide a cost efficient solution where undesired loads on the wind turbine tower are avoided or reduced. Additionally or alternatively, it may provide a solution that may be more easy to adapt and/or implement.

Additionally or alternatively, in embodiments of the present disclosure, the platform connection arrangement may comprise one or more upper platform connection arrangements that is/are located/arranged above the horizontal floor plane and connected to the wind turbine structure above the floor plane.

In certain embodiments of the present disclosure, the upper platform connection arrangement(s) may act as a primary support that takes/carries at least 50%, such as at least 60% or 70% of the weight of the platform (and the material/equipment loaded thereon/hanging therefrom).

In one or more embodiments of the present disclosure, the platform connection arrangement comprises one or more connector parts comprising an upwardly or downwardly facing opening into which an end of a connection part of the platform connection arrangement extend. In one or more further embodiments of the present disclosure, this may be provided as a result of an installation process where the platform is lowered onto a connection solution fixed to the wind turbine structure.

This may allow for easy installation and/or detachment of the platform arrangement at the wind turbine. The platform arrangement may hence be arranged at the wind turbine prior to attaching the equipment container(s).

In one or more embodiments of the present disclosure, the container connection arrangement comprises one or more connector parts comprising an upwardly or downwardly facing opening into which an end of a connection part of the container connection arrangement extend, such as a result of an installation process where the equipment container is lowered onto a connection solution fixed to and/or integrated in the support frame arrangement of the platform arrangement.

The present disclosure, moreover, in a second aspect, relates to a method of adapting a platform arrangement at an offshore wind turbine with one or more equipment containers, wherein the offshore wind turbine comprises a nacelle mounted on a tower, wherein said tower supports on a foundation arrangement. The platform arrangement comprises a floor comprising an upwardly facing floor surface for support of personnel on the platform, and the platform arrangement is structurally fixed to the wind turbine at a location below the nacelle and above the water level. The platform arrangement comprises a first side proximate the wind turbine and a second distal side arranged distal to the wind turbine, and platform sides extending from said distal side to said proximate side. The method comprises the steps of:
- approaching the offshore wind turbine comprising the platform arrangement by means of a vessel, such as a marine vessel,
- lifting an equipment container by means of a lifting arrangement to a position at one of said sides extending from said distal side to said proximate side,
- attaching the lifted equipment container to a support frame arrangement of the platform arrangement by means of a container connection arrangement, so that the equipment is suspended at a side of the platform arrangement, wherein said equipment container is arranged so that a container wall comprising an access opening of the lifted equipment container faces said platform arrangement.

This method may e.g. help to provide a fast and generally cost efficient solution in order to e.g. obtain one or more of the previously mentioned advantages.

In one or more embodiments of the method according to the second aspect, the vessel may be loaded with one or more equipment containers for installation at the platform arrangement. In one or more embodiments of the method, the vessel may comprise the lifting arrangement. In one or more embodiments of the present disclosure, the vessel may both be loaded with one or more equipment containers for installation at the platform arrangement and comprise the lifting arrangement for lifting the equipment container(s) to install one or more of these at the platform side(s).

In one or more embodiments of the method according to the second aspect, the lifting arrangement used during lifting and installation of the container(s), and/or lifting the container(s) during removal of the container arrangement from the platform arrangement, may be arranged at the wind turbine.

In some embodiments of the method according to the second aspect, the method may further comprise lowering the lifted equipment container so that one or more hook shaped equipment connectors of the container connection arrangement engages with a receiving part, thereby providing that the lifted equipment container is suspended at the side of the platform arrangement.

In one or more embodiments of the method according to the second aspect, said container connection arrangement may comprise one or more hook shaped connectors at the equipment container which engages with one or more engagement parts at the support frame arrangement. Additionally or alternatively, said container connection arrangement may comprise one or more hook shaped connectors at the support frame arrangement which engages with one or more engagement parts at the equipment container.

In one or more embodiments of the method according to the second aspect, the equipment container may be is lowered so that parts of the container connection arrangement engages so that the lifted equipment container is suspended at the side of the platform arrangement.

In one or more embodiments of the method according to the second aspect, the method may further comprise the steps of:
- lifting a further equipment container by means of a lifting arrangement to a position at another opposing side of the platform arrangement, and
- connecting the lifted further equipment container to the support frame arrangement of the platform arrangement by means of a further container connection arrangement so that the further equipment container is suspended at the opposing side of the platform arrangement, and so that a container wall comprising an access opening of the further equipment container faces said platform arrangement.

In one or more embodiments of the method according to the second aspect, said equipment container(s) may comprise a service container such as:
- a lavatory container,
- a living and/or accommodation container,
- a spare part container comprising a plurality of spare parts for use at the wind turbine to which the platform arrangement is attached and/or
- a workshop container, such as comprising one or more electrical tools, such as tools installed in and/or attached to the workshop container.

In one or more embodiments of the method according to the second aspect, he method may comprise the steps of:
- detaching one or more equipment containers from the platform arrangement by means of a lifting arrangement after a service task at the wind turbine has been executed, and
- placing the one or more equipment containers at a vessel such as a marine vessel.

In one or more embodiments of the method according to the second aspect, the lifting arrangement provides a lifting force so that the equipment container is moved upwards, thereby providing that the container connection arrangement detaches the equipment container from the support frame arrangement.

In one or more embodiments of the method according to the second aspect, said lifting arrangement may comprise a service crane arrangement arranged at the platform arrangement.

In other embodiments, the lifting arrangement may comprise a crane arrangement arranged external to the platform and/or wind turbine, e.g. arranged at a marine vessel or the like.

In one or more embodiments of the method according to the second aspect, one or more crane booms of the service crane arrangement may be suspended substantially horizontally from one or more support beams of said support frame arrangement, such as transverse support beams, at a distance above the upwardly facing floor surface, and wherein the crane boom comprises a first, proximate boom part arranged proximate the structure of the wind turbine, and a second, distal boom part extending out over an outer edge of the service platform floor at said second distal side.

In one or more embodiments of the method according to the second aspect, the service crane arrangement may comprise one or more of:
- a crane trolley configured to be displaced along a track in the longitudinal direction of the crane boom by means of a drive arrangement,
- a flexible lifting medium such as a wire, rope or chain,
- a winch for winding and unwinding the flexible lifting medium, and
- a drive unit for driving the winch.

In further embodiments of the method according to the second aspect, the flexible lifting medium may be connected to the crane trolley and a connection part suspended, so that the connection part is suspended from the crane trolley,
wherein the winch is controllable so as to lift and lower the connection part between an upper position located above a floor plane defined by the upper floor surface, and a lower position placed below the floor plane in order to allow loading or unload service equipment and/or personnel connected to the connection part onto or from a marine vessel when the crane trolley is placed at said second, distal boom part. The winch may be controllable so as to lift and lower the connection part to load and/or unload said equipment and/or personnel onto or from the service platform floor when the crane trolley is placed at said first proximate boom part.

In one or more embodiments of the method according to the second aspect, one or more guiding arrangements, such as one or more pulleys, guides the flexible lifting medium from the winch to a position above the lifted equipment container, such as so that a connection part for connecting the lifted equipment container to the flexible lifting medium is placed at a location above the lifted equipment container.

In one or more embodiments of the method according to the second aspect, said method provides an offshore wind turbine comprising one or more equipment containers according to the first aspect and/or one or more embodiments thereof.

### Brief description of the drawings

Embodiments of the present disclosure will be described in the following with reference to the accompanying drawings in which exemplary embodiments are shown, wherein:
- Figure 1: : illustrates an offshore wind turbine according embodiments of the present disclosure, comprising a service platform
- Figure 2: : illustrates embodiments of a service platform comprising a crane arrangement according to the present disclosure,
- Figure 3: : illustrates a service platform on an offshore wind turbine according to further embodiments of the present disclosure,
- Figure 4: : illustrates a service platform on an offshore wind turbine according to further embodiments where upper transverse support beams are provided,
- Figure 5: : illustrates a service platform according to embodiments of the present disclosure, where a service platform has a width that is lower than the tower width,
- Figures 6a-6b: : illustrate a control system according to embodiments of the present disclosure,
- Figure 7: : illustrates a crane arrangement and a platform according to embodiments of the present disclosure, where a load is lifted by the crane arrangement,
- Figure 8: : illustrates a floor structure according to the present disclosure,
- Figure 9: : illustrates a platform floor having an outer recessed floor edge placed beneath a crane beam, according to embodiments of the present disclosure,
- Figure 10: : illustrates an embodiment of the present disclosure where a trolley is arranged inside a wind turbine, and
- Figure 11: : illustrates an embodiment of the present disclosure wherein a winch is arranged external to a trolley,
- Figs. 12 and 13: : illustrates various embodiments of a connection arrangement and a method of installing a platform on a wind turbine structure according to embodiments of the present disclosure,
- Figs 12a and 12b: : illustrates embodiments of the present disclosure wherein a connector part comprising an upwardly facing opening is placed at a wind turbine,
- Fig. 13a: : illustrates an embodiment of the present disclosure wherein a connector part comprising a downwardly facing opening is placed at a platform,
- Fig. 14: : illustrates an embodiment of the present disclosure wherein equipment containers are attached to a working platform,
- Figs. 15a-15b: : illustrates embodiments of the present disclosure where an equipment container is installed at a frame arrangement of a platform,
- Fig. 16: : illustrates embodiments of the present disclosure where an equipment container is installed at a platform arrangement and comprises an entrance opening facing the platform,
- Fig. 17: : illustrates an embodiments of the present disclosure where an equipment container is installed at a platform comprising a railing arrangement comprising a gate arrangement, and
- Fig. 18: : illustrates embodiments of the present disclosure where an equipment container is lifted by means of a crane arrangement of a platform arrangement.

### Detailed description

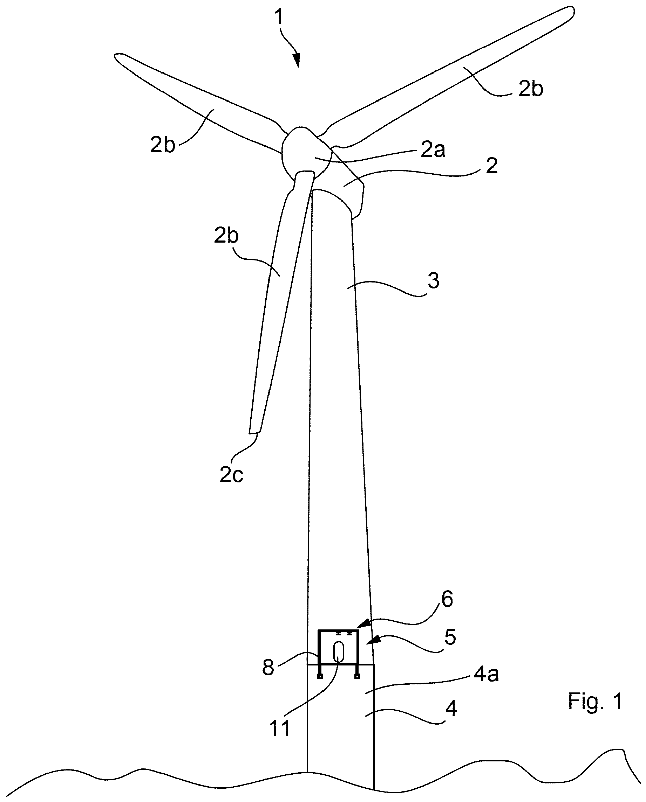

Fig. 1 illustrates, schematically and in perspective, an offshore wind turbine 1 according to embodiments of the present disclosure. The wind turbine comprises a nacelle 2 mounted on a tower 3. The tower 3 supports on a foundation arrangement 4. The wind turbine comprises wind turbine blades 2b attached at a hub 2a, and the hub is rotatably connected to a generator for generating electrical power. A gear may be present, or it may be a wind turbine of the gearless kind. The electrical energy generated by the generator from the wind energy may be transmitted from the wind turbine, e.g. to a utility grid, and/or be used locally at the wind turbine by one or more electric loads (not illustrated) such as one or more of rechargeable batteries, gas, such as hydrogen, production units and/or the like. Although not illustrated, it is understood that the wind turbine 1 may comprise various controllers, switchgear, drive train components, blade pitch mechanisms, yaw drives for rotating the nacelle, and/or the like.

The foundation arrangement 4 may in embodiments of the present disclosure comprise one of a tripod foundation, a monopile foundation, a gravity foundation, a jacket foundation or floating/buoyant foundation.

The foundation arrangement 4 may in embodiments of the present disclosure be a bottom fixed foundation arrangement that may either support on the sea floor or, in case it is a floating foundation arrangement, it may be connected to a connection part (not illustrated) at the sea floor by means of one or more foundation connection mediums such as wires or chains (not illustrated) extending between the floating foundation arrangement and the connection part at the sea floor.

In some embodiments of the present disclosure, at least a part of the foundation arrangement 4, such as the transition piece 4a, and the tower 3, may be/considered an integrated unit. Hence, in this embodiment, the transition piece part may be integrated in the lower tower structure 3 and may e.g. be configured to be permanently connected to the tower or may be considered a permanent part of the tower. Hence, during installation, a transition piece part 4a may not need to be connected to a foundation part before the tower is provided, as at least a part of the tower, such as the entire, tower may be connected to the foundation part as the transition piece may be integrated therein. In other embodiments of the present disclosure, the foundation arrangement may comprise a transition piece 4a arranged between a wind turbine foundation of the foundation arrangement 4 and the tower 3. Mechanical connections such as a plurality of bolts or the like, may connect and fixate the tower 3 to the transition piece 4a, and/or mechanical connections such as a plurality of bolts or the like, may connect and fixate the transition piece 4a to a remaining, lower part of the foundation arrangement such as one of the above mentioned foundation solutions.

The exterior tower 3 wall and/or the transition piece 4 wall may comprise a steel wall, a concrete wall such as reinforced concrete wall comprising steel and/or fibre reinforcements embedded in the concrete wall and/or the like. The wall of the tower and/or wall of the transition piece encloses a hollow interior room/space (not illustrated).

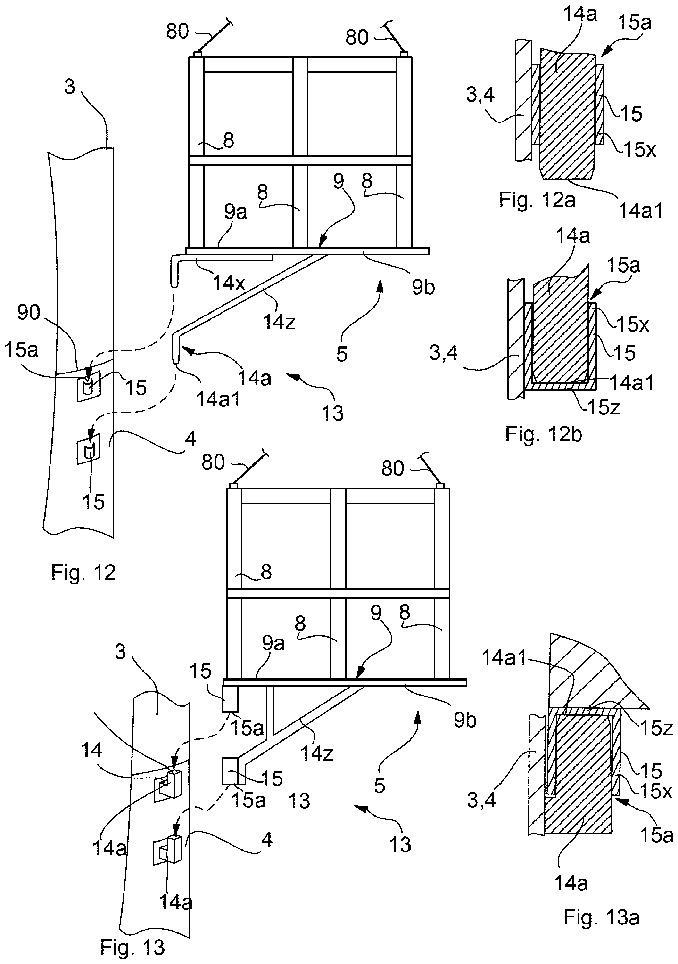

The service platform 5 may be structurally fixed, such as mainly structurally fixed, to the foundation arrangement 4 or tower 3 such as a transition piece or similar by means of a platform connection arrangements 13 (see also one or more of figs 12-13a).

As can be seen, the wind turbine comprises a service platform 5 placed beneath the wind turbine nacelle 2. The upwardly facing surface of the floor of the service platform 5 (also referred to as platform in the following), may be arranged at least three meters, such as at least four or five meters below a blade tip 2c when blade tip is placed in the lowermost position and hence when the blade extends substantially vertically and downwards, and with a distance to the sea surface/sea level.

The platform 5 may in embodiments of the present disclosure be a permanent platform that after installation may be maintained installed at the wind turbine over a substantial part of the wind turbine life time, and act as a service platform when service at the wind turbine is needed.

The position of the platform floor above sea level may be adapted to the local geographical conditions where the wind turbine is placed. In some embodiments of the present disclosure, this position may be predetermined dependent on the design and/or location of the foundation arrangement 4 and/or a certain part the tower 3. Local weather analyses and other may provide basis for determining how high the service platform 5 should be placed above sea level. Generally, the distance from the downwardly facing surface of the service platform floor to the sea level may be at least 5 meters, such as at least 10 meters, for example at least 20 meters such as at least 30 meters.

As can be seen from fig. 1, a door entrance 11 to the interior of the wind turbine 1 may be aligned to be accessible from the service platform 5. The service platform 5 floor arrangement may comprise an upwardly facing floor surface aligned with the lower part of the door entrance.

The wind turbine may moreover comprise a crane arrangement 6. Embodiments of the crane arrangement 6 are described in more details below.

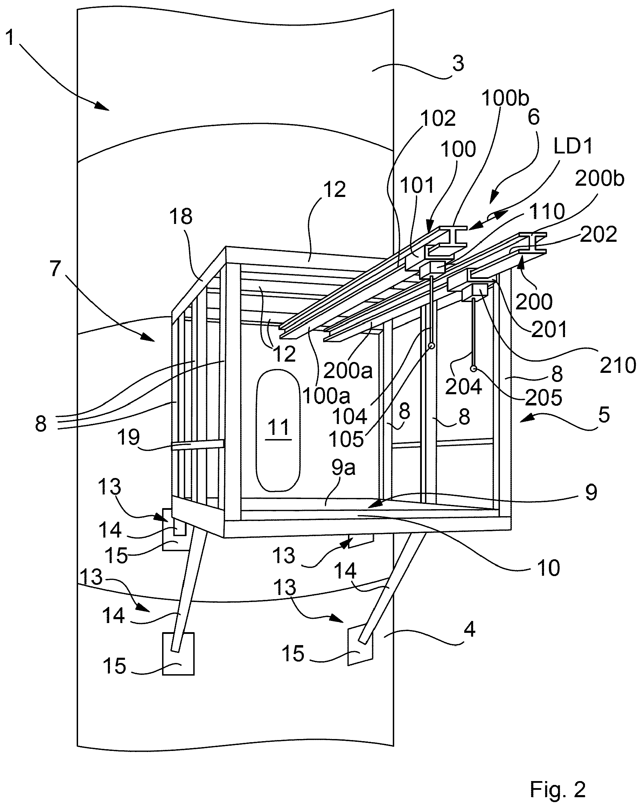

Fig. 2 illustrates, schematically and in perspective, the service platform 5 according to embodiments of the present disclosure.

The service platform 5 comprises a floor arrangement 9 comprising an upwardly facing floor surface 9a that may e.g. be aligned with a door entrance 11 of the wind turbine tower, at least so that a person and/or equipment can access the interior of the wind turbine through the opening 11, from the platform. The surface 9a may be arranged below a horizontal level of the lowermost part of the door entrance 11.

A service crane arrangement 6 comprises a support frame arrangement 7 and at least one crane boom 100, 200. In the present example, the crane arrangement comprises two crane booms that are arranged next to each other. It is generally understood that even though the figures may generally disclose two crane booms 100, 200 with each their trolley and the like, it is understood that in embodiments of the present disclosure, only one crane boom may be present. In further embodiments, three or more crane booms may be provided.

It is understood that the service platform 5 may comprise the service crane arrangement 6.

According to the present disclosure, the service crane arrangement 6 may as described above comprise the first crane boom 100 and the second crane boom 200, and these crane booms 100, 200 are spaced apart to provide a distance there between. Hence, a first crane trolley 101 is configured to be displaced along a track 102 in the longitudinal direction LD1 of the first crane boom 100, and a first flexible lifting medium 104 is connected to the first crane trolley 101 and a connection part 105, so that the connection part 105 is suspended from the first crane trolley. Moreover, a second crane trolley 201 may be provided and configured to be displaced along a track 202 in the longitudinal direction LD1 of the second crane boom 100. Here, a second, flexible lifting medium 204 is connected to the second crane trolley 201 and a connection part 205, so that the connection part 205 is suspended from the second crane trolley.

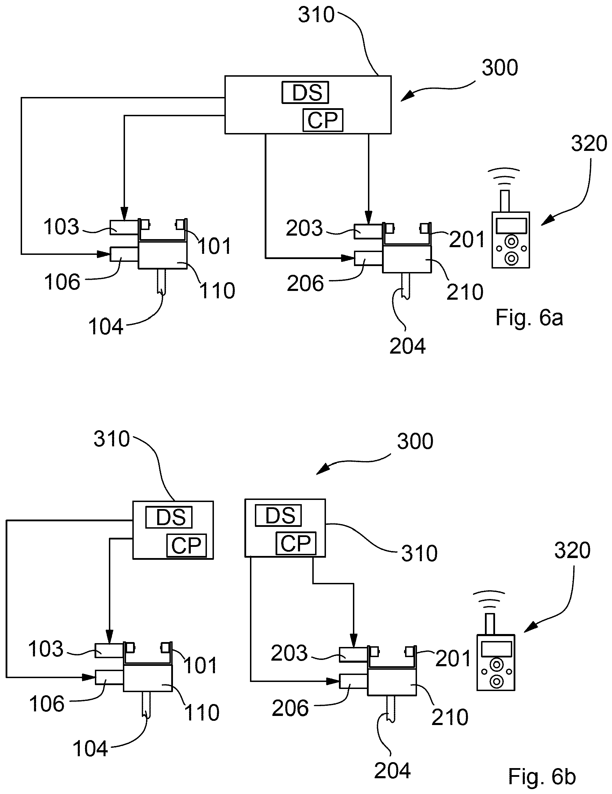

The two flexible lifting mediums may in embodiments of the present disclosure be connected to each their winch for winding and unwinding the respective lifting medium, where the winches may be configured to be independently operated. However, a single control unit may be configured to control both winches individually. In some embodiments, the controller may also be controlled to enable simultaneous control of the two winches, e.g. in order to enable lifting a load by means of both flexible lifting mediums at the same time, e.g. to distribute forces and/or enable improved balancing of the lifted load. This is described in more details later on, such as in relation to figs 6a-6b.

The spaced apart crane booms 100, 200 may in embodiments of the present disclosure be spaced apart horizontally as illustrated and/or be arranged parallel to each other.

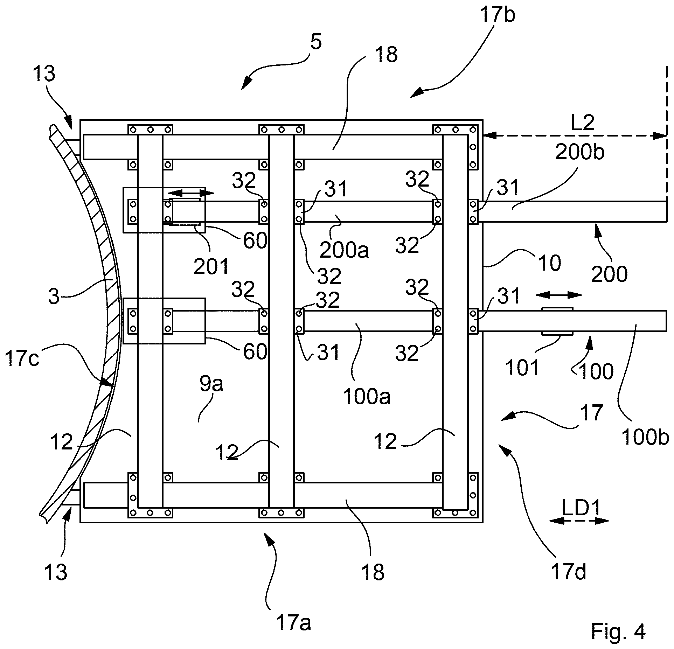

The support frame arrangement 7 is supported by the service platform 5 and comprises one or more upper support parts 12. The upper support parts 12 may comprise one or more transverse support beams, such as horizontally extending support beams, extending over the upwardly facing floor surface 9a. This may be provided as illustrated so that the one or more transverse support beams 12 extends between opposing vertical support arrangements of the support frame arrangement 7, where the vertical support arrangements comprises one or more support legs 8, such as vertically arranged support legs. These vertical support arrangements 8 may be arranged at the sides 17a, 17b (see fig. 4 for example) of the platform, and the transverse support beams 12 may hence extend over the platform floor surface 9a between the sides of the platform.

In some embodiments of the present disclosure, the transverse support beams 12 may be directly supported by the vertical support legs 8, in other embodiments, a horizontal interconnecting part 18, such as a beam, extending between vertical support arrangements such as the support legs 8 at the same side of the platform 5 may provide a support of the transverse support beams 12. In some embodiments, some transverse support beams 12 may be supported directly by vertical support legs 8 whereas other transverse support beams 12 may be supported by the interconnecting part 18 if present.

In some embodiments, the horizontal interconnecting part(s) 18 may comprise, be or act as a girder.

It is generally understood that the crane boom 100, 200 and/or one or more parts 8, 12, 18 of the support frame arrangement 7 may be made from one or more of steel, such as stainless steel, carbon fibre, glass fibre or concrete or other suitable materials. The materials may be different form the different parts, for example, the crane boom 100, 200 may comprise concrete such as strengthened concrete with metal or fibre reinforcements whereas the support frame arrangement 7 may mainly be provided in a steel material, or vice versa. In some embodiments, both the crane boom 100, 200 and the structural parts 8, 12, 18 of the support frame arrangement may be made from the same material such as concrete components, steel components and/or carbon fibre components. In the recent years, reinforcing solutions for structural components such as e.g. concrete components, such as reinforcements provided by means of carbon fibre fabric material and/or carbon fibre rods have improved. These may in some embodiments be used in the present crane solutions for one or more of the crane related components 100, 200, 12, 18, 8.

It is understood that the components of the platform and the crane arrangement, including the support frame arrangement, may comprise suitable treatment with the purpose of weather resistance, such as one or more coatings, such as paintings or the like, that may be suitable for use in a marine environment.

The crane booms 100, 200 are suspended substantially horizontally from the one or more upper support parts 12 at a distance above the upwardly facing floor surface 9a. The vertical distance from the floor surface 9a to a bottom surface of the crane booms 100, 200 may in embodiments of the present disclosure be at least 2 meters, such as at least 2.5 meter or at least 3 meters. In embodiments of the present disclosure, the vertical distance from the floor surface 9a to a bottom surface of the crane booms 100, 200 may be between 2 meters and 6 meters, such as between 2.5 meters and 5 meters.

Each of the crane booms 100, 200 comprises a first, proximate boom part 100a, 200a arranged proximate the tower, and a second, distal boom part 100b, 200b extending out over an outer edge 10 of the service platform 5 floor 9. The proximate boom part 100a, 200a of one or both of the crane booms 100, 200 comprises a boom part that is placed above the platform floor 9. The distal boom parts 100b, 200b extends out over the edge 10 of the floor, so that the distal boom part 100b, 200b hangs over the sea water, e.g. so that a marine vessel can move in under the distal boom part.

A crane trolley 101, 201 is placed at each of the crane booms. This trolley is configured to be displaced along a track 102, 202 in the longitudinal direction LDlof the respective crane boom 100, 200 by means of a drive arrangement.

A flexible lifting medium 104, 204 such as a wire, rope or chain, is connected to a winch 110, 210 for winding and unwinding the flexible lifting medium 104, 204. A drive unit (not illustrated in fig. 1) is configured to drive the winch.

The flexible lifting medium 104, 204 is connected to the crane trolley 101, 201 and a connection part 105, 205, so that the connection part is suspended from the crane trolley 101, 201. The connection part may comprise a hook arrangement, an interlocking mechanism, or the like, and is configured so that a load to be lifted can be connected to the flexible lifting medium through/by means of the connection part 105, 205.

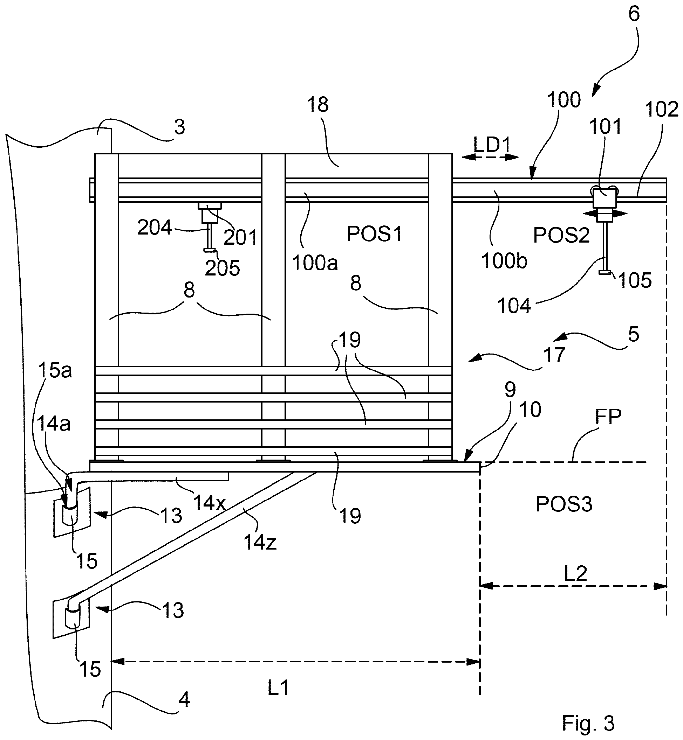

Fig. 3 illustrates, schematically and in perspective, the service platform 5 according to embodiments of the present disclosure, seen from the side.

Each of the winches 101, 201 are controllable so as to lift and lower the respective connection part 105, 205 between an upper position located above a floor plane FP (see fig. 3) defined by the upper floor surface 9a, and a lower position POS3 placed below the floor plane FP, see fig. 3.

This is provided in order to allow loading or unload service equipment 50 and/or personnel 40 connected to the connection part 105, 205 onto or from a marine vessel 30 when the crane trolley 101, 201 is placed at the second, distal boom part 100b, 200b. The respective winch 110, 210 is thus controllable so as to lift and lower the connection part to load and/or unload said equipment and/or personnel onto or from the service platform floor 9 when the crane trolley 101, 201 is placed at the first proximate boom part 100b, 200b.

The respective trolley can hence be moved between the proximate boom part and the distal boom part of the crane boom to which it is attached, along the track 102, 202. Hence, the loads connected to the connection part 105, 205 can be moved in a linear, vertical direction, and a linear horizontal direction, in order to move the lifted loads between the service platform 5 and a marine vessel.

In certain embodiments of the present disclosure, one or both crane booms 100, 200 may be configured to be displaced in a straight, linear direction sideways along the transverse beams 12 towards and away from the vertical support arrangements 8, also e.g. by means of a trolley system (not illustrated). This sideways displacement may be provided by means of one or more boom displacing units (not illustrated) such an electric motor, along the transverse beams 12. For this purpose, the beams 12 may comprise rails for guiding the boom, e.g. as may also be the case with the trolley 101, 201 that may comprise wheels for rolling on and along the track8s) 102, 202.

In other embodiments of the present disclosure, one or both of the crane booms 100, 200 may be configured to be maintained at a predefined, fixed position. The crane boom 100, 200 may here be supported by the one or more upper support parts 12 by means of a mechanical fixation connection such as one or more bolted and/or welded connections, at a predetermined fixation location so that the crane boom 100, 200 is configured to be maintained unmovable at the fixation location.

In embodiments, said crane boom may be aligned with, or is configured to be displaced to be aligned with, the door entrance 11.

In case the lifted load needs to be rotated in the horizontal plane when lifted, this may be provided by allowing a certain twisting of the flexible lifting medium and/or by providing a rotatable joint at the trolley and/or at a rotatable joint provided at a lifting equipment attached to the connection part 105, 205 or provided at the connection part.

The service platform is structurally fixed to the wind turbine. This may in embodiments of the present disclosure comprise that the service platform 5 is structurally fixed, such as mainly structurally fixed, to the foundation arrangement 4 below the wind turbine tower 3 by means of one or a plurality of platform connection arrangements 13. In other embodiments, the service platform 5 may be structurally fixed, such as mainly structurally fixed, to the tower 3.

The platform connection arrangement(s) may be configured to carry at least 70%, such as at least 80%, e.g. at least 95% of the overall weight of the service platform 5 and loads such as the equipment 50 and/or personnel 40 when handled by the service crane arrangement 6 and/or supporting on the platform floor 9.

The platform connection arrangement 13 may comprise comprises a carrying structure, such as one or more connection legs 14x, 14z, extending between the service platform and the wind turbine, such as the foundation arrangement. The carrying structure 14x, 14z comprises one or more structural parts such as rods, grid structures and/or the like, that may extend from at least 1/4 , such as at least 1/3 or at least ½ of the length L1 of the platform and towards the tower or foundation arrangement. E.g. in in inclining manner.

The platform connection arrangement(s) may be configured to transfer at least 70%, such as at least 80%, e.g. at least 95% of the overall weight of the service platform, service crane arrangement and loads such as the equipment and/or personnel handled by the service crane arrangement and/or supporting on the platform floor to the foundation arrangement 4, thereby preventing these loads from acting directly on the tower structure. Hence, the foundation arrangement 4 may be configured to carry, such as directly carry, at least 70%, such as at least 80%, e.g. at least 95% of the overall weight of the service platform, service crane arrangement and loads handled by the service crane arrangement and/or supporting on the platform floor.

The platform, service crane arrangement, loads (equipment and/or personnel) carried by the crane, support frame arrangement and the like may be carried by the same platform connection arrangement(s) 13.

As illustrated in fig. 3, the platform connection arrangement 13 may in embodiments of the present disclosure comprises an angle bracket arrangement such as a shelf support bracket arrangement 14x, 14z, 15. This is preferably located below a horizontal floor plane FP - see fig. 3, defined by the upper floor surface.

The platform connection arrangement(s) 13 may comprises one or more connector parts 15 such as brackets to which a carrying structure 14x, 14z of the connection arrangement(s) is attached so that the service platform is carried by the one or more brackets. As illustrated in fig. 3, the one or more brackets 15 may comprises an upwardly facing opening 15a into which a downwardly facing connection part 14a of the carrying structure extends. This may allow for easy installation and/or dismantling of the service platform at the offshore wind turbine as the platform may hence easily be installed by lowering the platform into/onto the brackets. In fig. 3, two connector parts 15 such as brackets are placed at each side of the platform (in this case above each other), and are each provided with an upwardly facing opening configured to receive a downwardly facing connection part 14a of the carrying structure. Here, the upper connection legs 14x is connected to the upper connector part 15, and the longer, inclining connection leg 14z extends from more than half of the length L1 of the platform, and towards the lower connector part.

It is generally understood that the even though the connection legs 14x, 14z are illustrates as individual legs, these may be connected to each other in order to provide e.g. force transfers or the like between the legs 14x, 14x.

It is understood that the platform 5 may be structurally fixed to the wind turbine at a plurality of fixation points such as discrete fixation points. As can be seen from fig. 2, the platform 5 may be structurally fixated to the wind turbine at four points/areas located at the spaced apart connector arrangements 15 at these fixation points. It is naturally also understood that also one or more further platform connection arrangements 13, or alternatively fewer (such as e.g. one, two or three platform connection arrangements 13, (not illustrated)may be provided. For example placed e.g. beneath the floor and between platform connection arrangements 13 at the sides/periphery of the platform, e.g. around the center of the width of the platform.

In some embodiments, it may be preferred that at least some of the connector arrangements 15 and carrying structure 14x, 14z may be placed beneath and/or substantially aligned with the respective vertical support arrangements, e.g. substantially as illustrated in figs. 2 and/or 3. This may e.g. be advantageous in order to provide a simple and efficient load transfer to the wind turbine when loads are lifted by the crane arrangement.

One, more or all of the fixation points may be placed at the foundation arrangement 4 at a level below the platform floor, or may be placed at the wind turbine tower, such as the lower third of the wind turbine tower, dependent on the constitution of the wind turbine. Hence, the service platform 5 may be structurally fixed, such as mainly structurally fixed, to the foundation arrangement 4 such as a transition piece or similar by means of a platform connection arrangements 13.

Said one or more brackets 15 may comprise one or more cup/bucket or pipe like bracket solutions comprising the upwardly facing opening 15a. It is generally understood that the bracket(s) 15 may comprise a rail or pipe, such as a sleeve or ring, like solution into which a connection part may be slidably engaged. When the platform is arranged at the desired location, further fixation means such as bolts (threaded or non-threaded bolts), welding, clips/hook solutions or the like may in embodiments of the present disclosure be provided to maintain the service platform in place and act as a safety measure.

The connector part 15 at the wind turbine 1 may be fixed to the wind turbine, such as a foundation arrangement of the wind turbine 4, by means of mechanical fasteners such as bolts, screws, interlocking mechanism and or the like. Additionally or alternatively, the connector part 15 at the wind turbine 1 may be fixed to the wind turbine, such as a foundation arrangement of the wind turbine 4, by means of welding and/or it may be considered an integrated part of a wind turbine component. It is generally understood that the part 15 may be provided in a part of for example the foundation arrangement 4 during manufacturing of the part of the foundation arrangement 4 designed to comprise the connector part 15. Further details and embodiments of the connection arrangement 13 are described in relation to figs. 12-13a.

It is generally understood, that in embodiments of the present disclosure, the service platform 5 may be configured to carry a rated, such as certified, total external weight, such as provided by personnel and/or equipment, of no more than 8 ton, such as no more than 5 ton, such as no more than 3 ton, for example no more than 2 ton. The self-weight of the platform and service crane arrangement should be added thereto.

In embodiments of the present disclosure, the service platform may be configured, such as rated and/or certified, to carry a total external weight, such as provided by personnel and/or equipment, of at least 1 ton, such as at least 2 ton.

The distal part 100b, 200b of the crane boom 100, 200 may extend with a length L2 of at least 1 meter, such as at least 2 meter, e.g. at least 3 meters out over the outer edge 10, see fig. 3.

The distal part 100b, 200b of the crane boom 100, 200 may extend with a length L2 of no more than 10 meters such as no more than 5 meters out over the outer edge 10.

In one or more embodiments of the present disclosure, the distal part 100b, 200b of the crane boom 100, 200 may extend between 1 meter and 10 meter, such as between 2 meters and 6 meters out over the edge 10. This may be defined between a vertical, envisaged plane defined by the edge 10, and the outer end, such as a free end, of the distal part 100b, 200b as e.g. illustrated in fig. 3. The length L2 of the part 100a, 200a of the different crane booms, 100, 200, if more than one boom is present, may be different or the same.

The service platform 5 may have a maximum length L1, extending in a horizontal direction away from and perpendicular to the tower 3 (or foundation arrangement 4), of no more than 10 meters, such as no more than 8 meters, such as no more than 6 meters or no more than 4 meters.

The overall length of the platform and the boom(s) may hence be defined as a sum of the lengths L1 and L2, see fig. 3.

As can be seen from figs. 2 and 3, the platform may comprise a railing arrangement 19 comprising one or more elongated rods or profiles. This/these may in embodiments of the present disclosure be attached to the support frame arrangement 7 of the service platform, e.g. attached directly or indirectly to the support legs 8. This railing arrangement may act as a safety measure and/or provide other functionalities.

Generally, in embodiments of the present disclosure, the platform 5 may be configured to be entered at an entrance opening 17 placed opposite to the tower. This opening 17 may be enclosed/framed by the floor surface, a transverse support beam 12 and support legs 8 at platform sides.

Fig. 4 illustrates schematically the platform 5 attached to the wind turbine 1 seen from above, according to embodiments of the present disclosure.

As can be seen, the floor may in embodiments of the present disclosure be adapted to the shape of the exterior periphery of the wind turbine tower or foundation arrangement 6. Hence, the platform floor may comprise a concave part proximate the tower that may be fitted so that the convex outer surface of the wind turbine can extend into the concave part of the floor.

Fig. 4 additionally illustrates that the platform arrangement comprises a first side 17c proximate the wind turbine structure and a second distal side 17d arranged distal to the wind turbine structure, and platform sides 17a, 17b extending from the distal side 17d to the proximate side 17c. As can be seen, the platform sides 17a, 17b may in an embodiment of the present disclosure be substantially parallel. The support legs 8 (see e.g. previous figures) of side parts of the support frame arrangement 7 may be distributed along each of the sides 17a, 17b so that a free platform space is provided between each of the side parts of the support frame arrangement 7 where personnel and equipment can be loaded and/or work.

The sides 17a, 17b, 17c, 17d may together describe a polygonal shape such as a rectangular shape when seen from above and extend around the periphery of the platform arrangement such as substantially around the platform floor. The sides 17a, 17b may as illustrated meet with the sides 17c, 17d at platform corners.

Fig. 4 moreover illustrates a further embodiment where the crane trolley 103, 203 is configured to be placed underneath a weather shield 60 such as a minor roof structure and/or inside a minor housing, at least when not in use. Hence. After use, a human operator or a control system may move the trolley to be placed underneath the weather shield, e.g. proximate the tower or at another location, so as to provide weather protection of the trolley and possibly also other parts connected thereto such as lifting arrangement, and/or the drive(s) for displacing the trolley and/or operating the lifting arrangement when not in use.

The maximum area, described in a horizontal plane, of the weather shield 60 such as a minor roof structure and/or minor housing may in embodiments of the present disclosure be less than 4m2, such as less than 3 m2 Such as less than 1.5 m2, e.g. less than 1 m2. The weather shield may describe a maximum area in a horizontal plane that is not more than half, such as no more than 1/3, e.g. no more than 1/5 such as no more than 1/8 of the maximum area described by the service platform floor in a horizontal plan.

The weather shield 60 may in some embodiments merely comprise a roof structure, but in other embodiments, it may provide a housing with an opening for receiving the trolley and associated equipment, and have side walls and possibly also at least partly a bottom wall (not illustrated)

In some embodiments of the present disclosure, a minor roof structure, such as a roof structure of the weather shield, may be placed at a permanent location, e.g. close/proximate to the wind turbine, or may alternatively be arranged to move together with the trolley or placed permanently at another location along the respective boom 100, 200.

In certain embodiments of the present disclosure (not illustrated in fig. 4), the weather shield may be omitted and the proximate part of the boom may extend into the wind turbine through an opening, and hence the trolley may be placed/moved inside the wind turbine, e.g. when not in use.

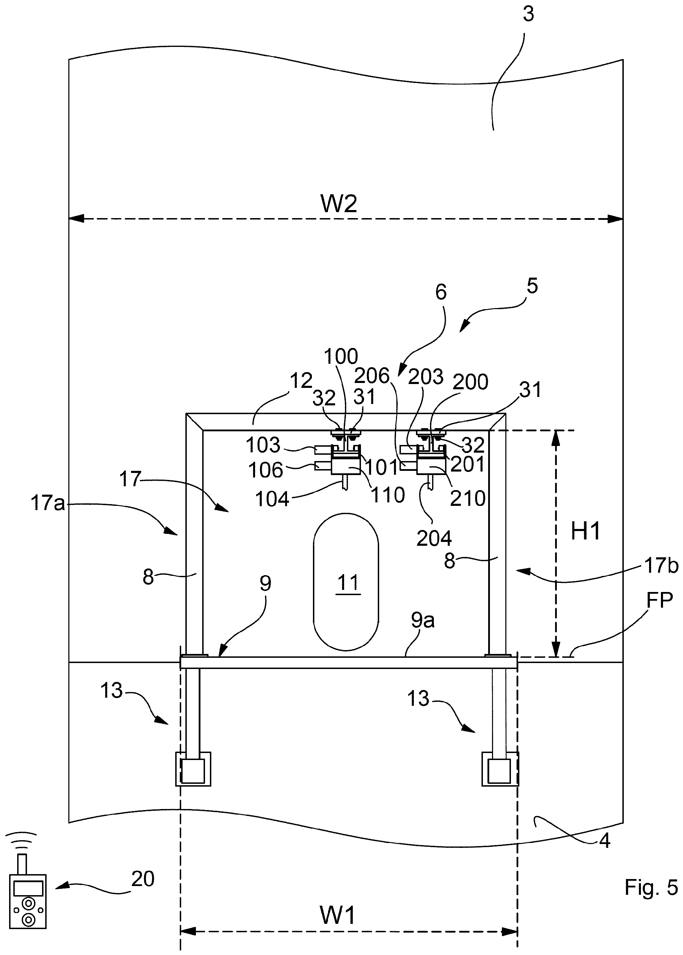

Fig. 4 additionally illustrates a further embodiment where the crane boom 100, 200 is connected to the transverse support beams by means of a crane boom bracket 31, see also fig. 5. The crane boom bracket 31 may e.g. comprise a plate or another suitable type of bracket that is connected, such as welded and/or bolted onto the transverse support beams 12. The crane boom bracket 31 may be directly or indirectly connected to the respective transverse support beam. The crane boom 100, 200 is then connected to the transverse support beams by connecting the boom to the crane boom bracket 31, preferably by means of mechanical, releasable fixation means such as comprising one or more of blots, a clips system, a clamping system and/or the like.

Fig. 5 illustrates schematically a service platform 5 according to embodiments of the present disclosure, seen in a front view.

The service platform 5 has a maximum width W1 extending horizontally and in a direction transverse to the longitudinal direction of the tower 3. The maximum width W1 of the service platform is smaller than the width W2, such as the diameter, of the tower 3, at least at the location opposite to the service platform 5.

The maximum width W1 of the service platform 5 may in embodiments of the present disclosure be at least 5%, such as at least 10%, for example at least 20% or 30% smaller than the width W2 of the tower.

The maximum width W1 of the service platform 5 may in embodiments of the present disclosure be no more than 10 meters such as no more than 8 meters, for example no more than 6 meter. In certain embodiments, the maximum width W1 of the service platform 5 may be no more than 5 meters such as no more than 4 meters.

In some embodiments of the present disclosure, the maximum length L1 and maximum width W1 of the service platform may vary less than 2 meters such as less than 1 meter, e.g. less than 0.5 metres. In some embodiments, width W1 and L1 may be substantially identical.

The width W1 is determined/defined between the opposing platform sides 17a, 17b extending from said distal side to said proximate side.

The platform also comprises a height H1 extending between the upper floor surface 9a and the transverse support beams 12. The height H1 may in embodiments of the present disclosure be at least 2 meters such as at least 2.5 meters, e.g. at least 3 meters or at least 4 meters. The height H1 may e.g. be between 2 meters and 8 meters, such as between 2 meters and 6 meters or between 2 meters and 5 meters.

It is generally understood that the service platform according to embodiments of the present disclosure may be considered as an external add-on to the wind turbine rather than being integrated in the wind turbine tower/foundation arrangement structure. The service platform may e.g. be mounted during installation of the wind turbine or after the wind turbine has been installed. The wind turbine may hence merely be approached by a marine vessel or another suitable type of vessel, and a crane arrangement or the like may lift and move the service platform towards the tower and the service platform is then attached to the platform 5 by means of the platform connection arrangement 13. This may in certain embodiments be provided by lowering the platform so that the downwardly facing connection part engages with an upwardly facing opening of the connection part. However, any other suitable types of connection means, such as mechanical connection means such as bolts, clamps, hook connections or the like, may additionally or alternatively be utilized for connecting and fixating the platform to the tower. It is understood that the boom(s) 100, 200 etc. may be pre-installed already when the platform is mounted on the wind turbine. In other embodiments, these components may be installed after installation of the platform, e.g. by means of connecting the boom(s) 100, 200 to crane boom brackets, and then provide the trolley.

Fig. 5 illustrates a further embodiment of the present disclosure, where the drive arrangement 103, 203 comprising a drive unit for displacing the crane trolley along the respective crane boom is located at and moves together with the crane trolley.

Moreover, Fig. 5 illustrated an embodiment of the present disclosure wherein the winch 110, 120 is attached to the crane trolley 101, 102 to be displaced together with the crane trolley. Here, the drive unit 106, 206 for driving the winch may also, in further embodiments be located at and move together with the crane trolley. In other embodiments, the winch may be located (not illustrated in fig. 5) at another, e.g. fixed, location such as proximate the wind turbine or inside the wind turbine with the wire extending from the interior of the wind turbine and to a pulley or the like at the trolley.

One or both of the drive unit of the drive arrangement 103, 203 and the drive unit for driving the winch may comprise an electric motor, such as a 1 or 3 phase electric AC motor. In some embodiments, one or both of the drive unit 103, 203 and 106, 206 may comprise a DC motor. In some embodiments, one or both of the drive unit 103, 203 and 106, 206 may comprise an electric stepper motor or an electric servo motor. In other embodiments, one or both of the drive unit 103, 203 and 106, 206 may comprise another type of drive unit such as e.g. a hydraulic or pneumatic motor.

Figs 6. 6a and 6b illustrates schematically different embodiments of a control system 300 for controlling the crane arrangement according to embodiments of the present disclosure. The control system 300 is configured to control the operation of the cane arrangement, at least partly based on user input from a human user, such as provided by means of a remote control. The remote control 320 may e.g. be placed on the marine vessel. Additionally or alternatively, a remote control 320 may be located at the wind turbine such as at or near the platform 5.

In fig. 6a, the control system 300 comprises a common control unit 310 for controlling the winch and trolley positioning at both crane booms. The controller hence is configured to output/transmit wired and/or wireless command signals to units 103, 203, 106, 206 at different crane booms. The control unit 210 may be located at the wind turbine such as covered by a weather shield as previously explained, it may be located inside the wind turbine or it may be located at another position at the wind turbine, such as e.g. attached to the support frame arrangement 7 or the like.

A user at a marine vessel may operate a remote control 320 to control one or both of the winches 110, 210 and position of the trolley 201, 101.

Hence, the user may operate the position of the first trolley 101 and the first winch 110 by controlling one or more control means of the remote control 320 such as one or more joysticks and/or buttons on the remote control while the second trolley 201 and the second winch 210 are kept still/uncontrolled. Additionally, the user may operate the position of the second trolley 201 and the second winch 210 by controlling one or more control means of the remote control 320 such as one or more joysticks and/or buttons on the remote control while the first trolley 101 and the first winch 110 are kept still/uncontrolled.

The control system 300 may, in embodiments of the present disclosure, be configured to facilitate a "synchronized" control mode where both of the trolleys 201, 101 and/or both winches 110, 210 are controlled simultaneously in order to e.g. lift a common load by means of both flexible lifting mediums 104, 204. Hence, here, the control system 300 may be configured so that it may e.g. align the trolleys, so that these together may lift a common load, and/or may be configured so the trolleys are moved simultaneously and with the same speed along the booms 100, 200, when an operator operates control means of the remote control 320 such as a single joystick and Or buttons configured to operate the common control mode. Additionally, or alternatively, to common control mode may comprise a simultaneous lifting and lowering of the flexible lifting mediums with the same movement speed to lift and lower the common load. In the common control mode, a common lifting equipment such as a harness, a frame or the like may be connected to both connection parts 105, 205 that are connected to the respective flexible lifting mediums 104, 105. The common load may in embodiments of the present disclosure be equipment or a person.

Fig. 6b illustrates a control system according to embodiments of the present disclosure. Here, the control system 300 comprises individual controllers 310. Hence a first controller is configured to transmit command signals to units 103, 106, associated with the first boom 100 in order to control the winch 110 and trolley 201. The control unit. The control system additionally comprises a further, second controller is configured to transmit command signals to units 203, 206, associated with the second boom 200 in order to control the winch 210 and trolley 201. Hence, the user may operate the position of the first trolley 101 and the first winch 110 by controlling one or more control means of the remote control 322, and this is provided by means of/through the first controller. Additionally, the user may operate the position of the second trolley 201 and the second winch 210 by controlling one or more control means of the remote control 320, and this is provided by means of/through the further controller. Hence, one controller may be independent of the operational state of the other controller.

In certain embodiments, the remote control 320 may however be equipped with control software and other means that may in some embodiments enable a common control mode as e.g. described above by transmitting control signals to both control systems 310 as shown in fig. 6b.

In some embodiments, the remote control 320 may be configured to operate one trolley and winch associated with one of the crane booms 100, 200. Another remote control, e.g. located at the platform or at the wind turbine interior or exterior the like, may be associated with controlling the winch and the like associated with the other of the crane booms. The latter remote control may be designed so that it should not be removed from the platform or wind turbine exterior/interior, e.g. by wiring and/or other fixation means. Hence, a user may enter the platform by means of first crane boom by operating trolley and winch of one of the crane booms from the vessel by means of a remote control, and first upon entrance on the platform, the control of the trolley and winch of the other crane boom may be possible by means of a remote control dedicated thereto.

In other embodiments, a common remote control, or two different remote controls, located at the vessel may be used for operating the winches and trolleys associated with both crane booms from the vessel upon arrival at the wind turbine.

It is generally understood that the controller(s) 310 may comprise a computer processor CP and a data storage DS comprising a computer program code. The processor CP executes the code in the data storage DS to operate the drive unit(s) for driving the winch and the drive unit(s) for moving the trolley along the crane boom. The controller 310 may also comprise a suitable communication interface, e.g. such as a wireless communication interface and/or a wired communication interface, designed to enable receipt of control signals from a remote control 320, and the computer processor CP acts upon the received control signals and controls the winch(es) and trolley(s) based on the received control signals and the software program code in the data storage DS. The software program code may comprise a set of predefined rules that determines how and/or when the computer processor should provide control signals to the units 103, 203, 106, 026 configured to be controlled by the respective controller 310. It is understood that some of the control may be provided at the drive units themselves, e.g. in case the drive unit comprises a stepper motor or a servo motor, the drive units may receive set points, and act accordingly e.g. with regard to speed and/or distance and/or torque.

The crane arrangement may in embodiments of the present disclosure comprise one or more load determining means for determining the weight of the lifted load directly or indirectly, and this may also provide input to the control system 300. The one or more load determining means may comprise one or more of a strain gauge solution, a torque measuring unit (e.g. implemented in a drive unit 103, 106, 206, 206) and/or the like. Hence, if the weight of the load to be lifted exceeds a threshold set in the software code, the computer processor will assure that the related crane will not operate, and information may be transmitted to the remote control and presented on a screen so that the user knows that the load to be lifted is to large. This may e.g.be provided so that a crane boom configured as a personnel crane has a lower weight set point than the other crane that is dedicated to lift equipment.

The feature of determining the load to be lifted may also be used in case the crane arrangement comprises more than one crane boom, winch and the like as previously explained, and these are used simultaneously to lift a common load such as personnel and/or equipment. The control system 300 may here act on weight input to assure proper control of the winches to lift the common load.

In some embodiments, in case the common load may be personnel, a first of the winches and booms and flexible lifting mediums may act as a primary lifting equipment for the personnel. However, the control system 300, 320 may also operate the other of the winches at the other crane boom to act as a secondary/backup lifting equipment so that the weight lifted by the other flexible lifting medium is reduced compared to the weight lifted by the first flexible lifting medium. This may be based on the weight information and/or position information obtained from sensors. Hereby, the other flexible lifting medium act as a backup providing redundancy in case failure occurs when lifting by means of the primary lifting equipment. This may also be provided in further or alternative embodiments hen lifting equipment 50.

It is understood that the primary lifting equipment may lift at least 60%, such as at least 80%, for example at least 99% of the weight of the lifted load. The secondary lifting equipment may be controlled by the control system based on the software and rules of the data storage DS by controlling the winch of this equipment so that it is kept at least partly tensioned and does not kept too slack so that in case the primary lifting equipment fails and the first flexible lifting medium unintentionally unwinds, the lifted common load does not experience any, or experiences at least only a limited, sudden lowering as the secondary lifting equipment takes over the lifting.

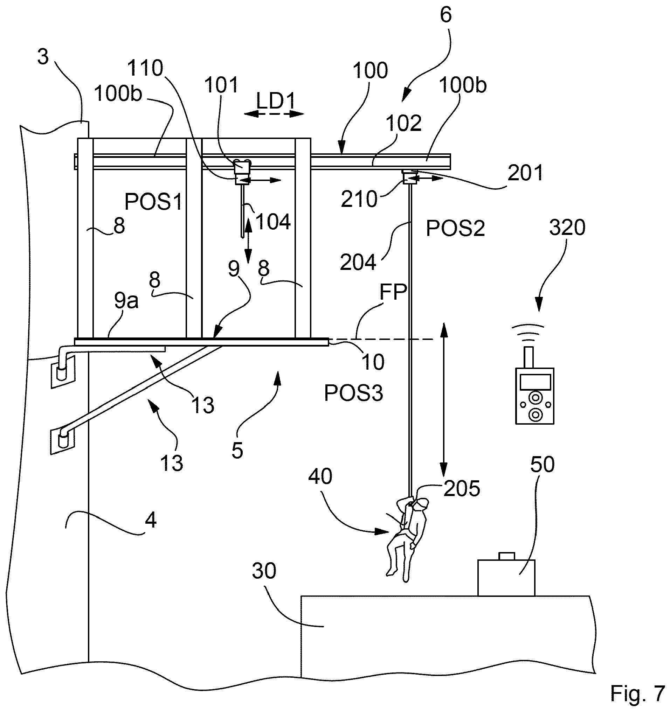

Fig. 7 illustrates an embodiment of the present disclosure where personnel 40 is lifted by the crane arrangement 6. As previously mentioned, and as illustrated in other figures too according to the present disclosure, the crane arrangement 6 may comprise two cranes comprising each their crane boom 100, 200, each their trolley and 101, 201, and each their flexible lifting medium 104, 204 controlled by a winch 110, 210.

Hence the first crane comprising the first crane boom 100 may in embodiments of the present disclosure be a crane dedicated to be an equipment crane boom for use during transport of equipment 50 between the marine vessel 30 and the service platform 5 , such as tools, spare parts, and/or other relevant equipment for use by personnel 40 during service at the wind turbine 1.

The second crane boom 200 (in fig. 6 hiding behind the first crane boom 100) may be a dedicated personnel crane boom for use during transport of personnel between the marine vessel and the service platform 5.

In other embodiments, the functionality of the cranes may be switched so that the crane boom 100, trolley 101 and lifting medium 104 are for lifting personnel, whereas the crane boom 200, trolley 201 and lifting medium 204 are for lifting equipment.

The weight of the equipment 50 to be lifted by the equipment crane boom may be between e.g. 0-4000 kg such as 0-3000 kg, and often above 500 or 1000 kg, in some situations even more than 3000 kg.

The weight of the personnel 40 to be lifted may generally not surpass 300 kg, such as not surpass 200 kg or 150 kg including clothes, safety equipment, and some general tools and/or other equipment carried by the personnel her/himself. However, the weight of a personnel lifting device 20 such as comprising a harness, a lifting frame such as a personnel cage, personnel platform or personnel chair like device, that in embodiments of the present disclosure may be used to be connected to the connection part 105, 205 and so that the personnel 40 can be lifted by the personnel lifting device 20 so that the person can be lifted by the crane, may in embodiments of the present disclosure be added to that weight of the personnel. In case multiple persons are lifted at one, the said personnel weight may raise, e.g. if two or three persons are lifted simultaneously, the personnel weight may be between 160 kg and 900 kg, such as between 200 kg and 600 kg compared to the persons own weight and the equipment lifted by the person. In some situations, the person may also bring one or more toolboxes (not illustrated) or the like when lifted by the crane.

It is generally understood that one or more of the first and second crane booms 100, 200, see e.g. figs 2-5, the first and second trolley 110, 210, winches and/or the like may vary in size, type and/or rated handling weight. Alternatively one or more of these may be of substantially the same configuration with respect to one or more of e.g. size, type and/or rated or certified handling weight.

In fig. 7, the wind turbine 1 has initially been approached by the marine vessel 30. Then a user operates the remote control 320 to operate a crane trolley 101, 201 by means of the drive arrangement 103, 203 to place the crane trolley at the second, distal boom part 100b, 200b. This may be obtained by establishing a wireless communication link between the remote control 320 and a control system 300 as e.g. described above in relation to figs. 6a and/or 6b. A lamp or the like at platform 5 or wind turbine 1 may indicate that a proper communication link is established, and/or this information may be provided at the remote control at a screen or by means of another visual indicator.

Then, the user at the marine vessel operates the remote control 320 in order to move/position the trolley at the distal part 100b of the crane boom 200. This may in other embodiments be provided automatically by the control system upon establishing of the communication link, according to the program code as previously described in relation to figs. 6a, 6b. This may also act as a visual indication that a communication link has been established. Then the user operates the remote control to operate the flexible lifting medium 204 and connection part 205 to lower these from a position POS2 above the floor plane to a position POS3 below the floor plane FP and towards the marine vessel 30 by means of the winch 210, while the crane trolley is placed at the second, distal boom part 200b.

Some security software of the software in the data storage and/or mechanical security solutions, may in embodiments of the present disclosure prevent the trolley 201 from being moved to the first position POS1 above the platform floor 9 while the trolley is placed at boom part 100b and the connection part 205 is determined to be below the floor plane FP. This may e.g. be determined by determining the degree of unwinding of the winch 205 by information provided by the drive unit itself (such information may be directly or indirectly available in stepper motors or servo motors, it may be information calculated/monitored by the control system 300, and/or it may be obtained by means of sensor solutions such as optical, magnetic sensors.

Then the personnel lifting equipment 20 is attached to the lowered connection part 205, and the personnel 40 such as a single person or alternatively multiple persons in case the personnel lifting device 20 facilitates this, are lifted vertically from the marine vessel 30 by operating the remote control. A person at the marine vessel may control the lifting and/or the lifted person may bring a remote control to control the lifting him/herself. A further remote control may be maintained at the marine vessel for safety in case unintended events happens, such as the lifted person(s) getting ill or hurt, or a remote control 320 stops working.

When the lifted personnel 40 has been lifted to the position POS2 above the floor plane FP by means of the winch 210, the crane trolley is operated by means of a drive arrangement so as to move the crane trolley 201 and thereby the personnel 40 to a position above the floor. It is generally understood that all the personnel lifting may be provided by substantially linear vertical and horizontal movements of the lifted loads.

In some embodiments of the present disclosure, if several, such as two crane booms are provided in the crane arrangement 6, a first crane boom 100, first crane trolley 101, first flexible lifting medium and a first winch 110 may be used for transporting equipment 50 between the service platform 5 and the marine vessel 30. In certain embodiments, this crane may be a dedicated equipment crane that is assigned for only lifting equipment during at least normal operation. A second crane boom 200, second crane trolley 201, the second flexible lifting medium 204 and second winch 210 may be used for transporting personnel 40 between the service platform 5 and the marine vessel 30. In certain embodiments, this crane may be a dedicated personnel crane that is assigned for only lifting personnel 40 during at least normal operation. In some embodiments the personnel crane may act as the primary crane lifting the personnel, and a second, backup may be provided by the equipment crane that may also be arranged to lift the personnel in case failure or the like occurs at the personnel crane. Hence, the control system 300, 320 may operate the winch of the equipment crane so that the weight lifted by the equipment crane is reduced compared to the weight lifted by the personnel crane. A winding of also the winch of the equipment crane may however be provided by the control system 300, e.g. in a manner synchronized with the operation of the winch of the personnel crane in order to avoid too much slack when lifting the personnel from the marine vessel 300 and to the platform. Additionally, the control system may naturally also automatically unwind the winch of the equipment crane, or the winch may be arranged in an idling mode, when lowering a person towards the marine vessel. In case of an idling mode, a breaking system may be provided so that a sudden failure in/at personnel crane, such as a winch or motor failing, will prevent the winch of the equipment crane from idling and unwind unintentionally due to the weight of the lifted load.

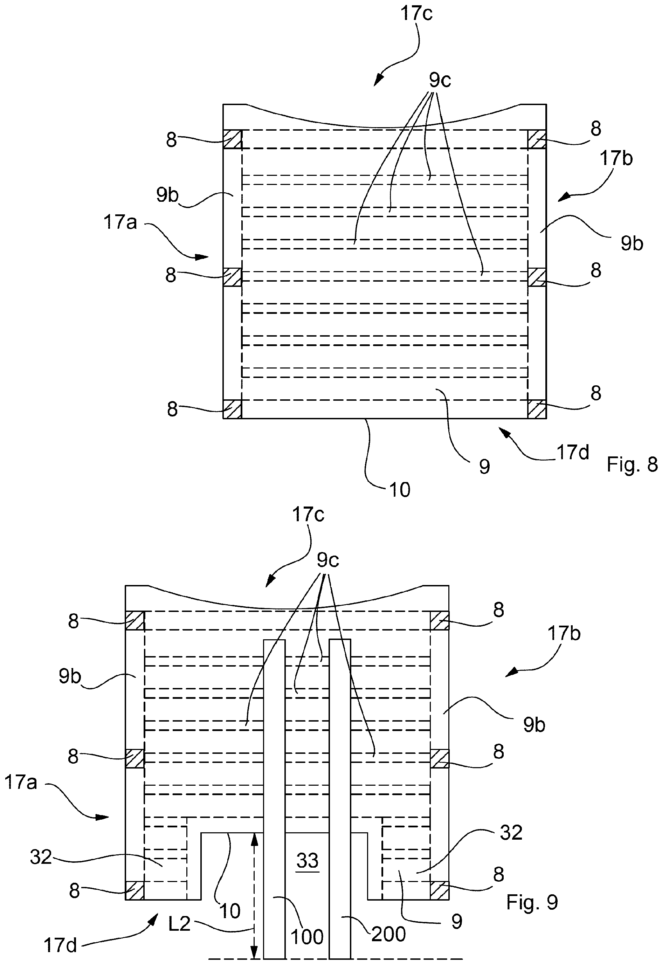

Fig. 8 Illustrates an example of a floor structure according to embodiments of the present disclosure, seen from above. As can be seen, the flooring 9 may rest on floor beams 9c. The floor beams extends in a transverse direction of the floor between sides of the service platform, between floor carrying structures 9b, such as floor beam carrying structures 9b, such as girders, such as comprising one or more of an H-, I-, T-, or box-beam. The floor carrying structures 9b may in embodiments of the present disclosure be arranged below the vertical support arrangement 8 such as the support legs that carries the one or more upper support parts 12. Additionally, or alternatively, the platform connection arrangement 13 may in embodiments of the present disclosure be arranged below, or at least connected directly or indirectly to, the floor carrying structures 9b

Fig. 9 illustrates an embodiment of the present disclosure, wherein the outer edge over which at least one of the beams 100, 200 extends, is arranged at a recessed portion of the service platform floor to provide a space between side parts 32 of the service platform floor 9, and the equipment and/or personnel may be transported in the recess space 33 in the vertical direction. At least one of the transverse support beams 12 carrying (a part of) one or more crane booms 100, 200 may in further embodiments (not illustrated) be arranged above the said space 32 provided by the recessed portion of the floor, in order to support the one or more crane booms near the location where the trolley 101, 201 may be arranged when lifting/lowering the equipment and/or personnel towards and from the marine vessel. A user may stand at the floor parts 32 during operation of the equipment crane, e.g. while being secured to a railing, see figs 3 and/or 2.

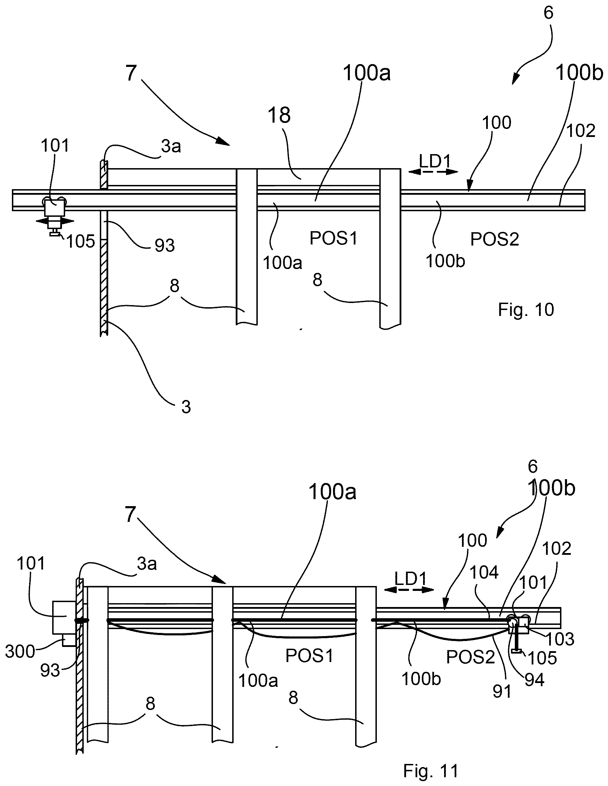

Fig. 10 illustrates schematically an embodiment of the present disclosure wherein the trolley 101, configured to move in the longitudinal direction LD1 of a crane boom along a track 101 of the crane boom may be moved from the exterior of the wind turbine above the platform floor, and into the interior of the wind turbine 1 through an opening 93 in the wall 3a, such as an opening in an exterior wall of the wind turbine, such as a tower wall, transition piece wall, or another wall of the foundation arrangement when not in use for lifting equipment or personnel. It is understood that the control system 300 as previously explained may be placed at the trolley or maintained inside the tower. This may e.g. help to provide that the wind turbine acts as a weather shield when the crane arrangement is not in use, as the trolley (and other crane components such as winch, may hence be protected from the weather inside the wind turbine.

In some additional or alternative embodiments, the trolley and the boom inside the wind turbine may be used for lifting and possibly also transportation tasks inside the wind turbine.

In some embodiments, a door, gate or the like (not illustrated), such as a door configured to move in one or more directions, such as a door arranged to be displaced parallel to a plane defined by a major surface of the door, or to be opened as a conventional door or a revolving door, may be openable and closeable, so that in the open position, the trolley can pass through the opening 93, and in the closed position it may provide a weather shield so that the amount of water, moist and the like that can enter into the wind turbine through the opening 93 is reduced compared to if the door is maintained in the open position.

In some certain embodiments of the present disclosure (not illustrated), the opening 93 may be provided by the door entrance 11, such as the opening 93 may be integrated in the door entrance 11, such as in the upper part of the door entrance. This may e.g. enable transportation of lifted loads, such as equipment, through the door opening from the exterior to the interior of the wind turbine and vice versa through the door entrance by means of a crane boom of the crane arrangement. This crane boom may in embodiments of the present disclosure as e.g. illustrated in some of the figures described above be a crane boom 100, 200 that comprises the distal part 200b, 100b, and the proximate part 200a, 100a as previously disclosed.

Fig. 11 illustrates schematically an embodiment of the present disclosure wherein the winch 110 is maintained in a fixed position inside the wind turbine such as inside a transition piece or inside the tower. The flexible lifting medium 104 hence extends from the winch 110 and to a "passive" pulley 94 at the trolley 101, and is suspended therefrom to the connection arrangement 105. The control system 300 may be configured to operate/synchronize the movement of the trolley 101 and the winch 110 so that a movement of the trolley automatically is compensated for by winding and unwinding the lifting medium 104 by means of the winch 110, in order to reduce or substantially prevent a variation of the vertical position of the connection part 105 when moving the trolley along the boom 100 in the longitudinal direction LD1 along the track 102. The winch 110 arrangement in fig. 11 may alternatively in further embodiments of the present disclosure be arranged stationary (not illustrated) outside the wind turbine, e.g. hanging from an upper support part 12, attached and fixated to the crane boom 100 or attached to the wind turbine wall 30a. Here the winch may be kept stationary proximate the wind turbine tower or the like in order to make a larger part of the boom available for the trolley 101.

For powering the drive arrangement 103 such as a motor for displacing crane trolley along the track, an electrical cable 91 may in embodiments of the present disclosure extend from the control system 300, e.g. from the interior of the wind turbine. Alternatively, the drive arrangement 103 may be battery powered in other embodiments of the present disclosure.

In case the winch 101 is instead configured to move along the boom (as in e.g. fig. 10), an electric cable (not illustrated) may extend from the trolley 101 to the power source too, or alternatively this may also be battery powered. The electric cable may be configured to be communication medium for control signals from the control system, and/or may comprise wires that are configured to be a permanent power source, e.g. in case control circuitry of the control system 300 is placed at or near the trolley 101. Here, a permanent power source may be considered permanent as in that the electrical power is substantially continuously available or at least available when the crane system is in an ON/active mode, such as upon or substantially after establishing a communication link between a remote control and the control system that may turn the crane arrangement on for operation. Such cables may be configured to hang from and guided by suitable movable guides arranged along the track 102 or in any other suitable way, e.g. guides placed along a separate carrying structure that is separate to the boom and e.g. connected to one or more upper support parts 12 (se previous figures.), or arranged along another part of the boom 100

It is understood that if several crane booms 100, 200 are provided as e.g. previously described, one or more of the embodiments described in relation to e.g. fig. 10 and/or 11 may apply for one or both cranes provided by means of the crane booms. Hence, e.g. only one of the crane booms may extend into the tower whereas the other may not. Additionally or alternatively, one of the trolleys, such as an equipment crane trolley, may be arranged to move into the tower whereas the other may not, but may e.g. in further embodiments be arranged under/in a weather shield 60 arranged external to the tower. In some embodiments, one of the winches 110, 210 may be placed external, to a first trolley at a first boom 100, 200, e.g. at a fixed position, whereas the other winch may be configured to be placed at and/or move together with the trolley 101, 201 at another crane boom. It may though be preferred that both winch solutions may be substantially the same as this may be advantageous from a spare part point of view.

Fig. 12 illustrates schematically and in perspective an installation of a platform 5 according to embodiments of the present disclosure, where a platform 5 is installed by means of a connection arrangement 13 at the wind turbine. In the illustrated embodiment of fig. 12, the crane arrangement 6 is omitted. This crane arrangement may either continue to be omitted dependent on the intended usage of the platform 5 after installation, but it may alternatively also be installed later on. In still further embodiments, the crane arrangement may be arranged at the platform already at the time of installation of the platform 5 at the wind turbine site.

As previously described, the platform is connected to the wind turbine by means of the connection arrangement(s) 13. The platform connection arrangement 13 comprises connector parts 15, such as brackets, on the wind turbine. Moreover, the connection arrangement 13 comprises one or more carrying structures 14x, 14z placed on the platform and firmly attached to the platform. These carrying structures 14x, 14z may be placed below the wind turbine floor and attached to e.g. a floor frame arrangement 9b, or 9c (see also figs. 8-9) of the platform. However, it is understood that the carrying structures 14x, 14z may be connected to any suitable frame part of the platform 5 in order to assure sufficient strength and/or stability.

The one or more connector parts 15 may as illustrated be hollow, such as comprise sleeves, and provide an upwardly facing opening 15a into which a downwardly facing connection part 14a of the carrying structure 14x, 14z is arranged to extend after installation. Hence, the platform 5 may be installed by lowering the platform 5 into/onto the brackets by means of a crane from which the platform hangs, e.g. by means of wires or chains 80 or by another suitable device for use during installation of the platform at the wind turbine site.

In fig. 12, two connector parts 15 each comprising a sleeve with the opening 15a are placed above each other (see also previous figures) at a side of the platform, and are each provided with an upwardly facing opening configured to receive a downwardly facing connection part 14a of the respective carrying structure 14x, 14z of the platform, which may e.g. be connection legs or another suitable frame structure.

During installation, the platform 5 is lowered by a crane or the like, so that the downwardly facing connection parts 14a extends into the opening 15a.

The upper connection leg(s) 14x may be connected to the upper connector part 15, and the longer, inclining connection leg 14z may extend from more than half of the length L1 of the platform, and towards the lower connector part. It is generally understood, as also previously stated, that the even though the connection legs 14x, 14z are illustrates as individual legs, these may be connected to each other in order to provide e.g. force transfers or the like between the legs 14x, 14x. The lower leg 14z may additionally or alternatively be connected/attached to the frame of the platform at a plurality of locations along the leg 14z, e.g. by means of beams (not illustrated) or the like.

Figs 12a-12b illustrates schematically a cross sectional view of the connector part 15 in the form of a sleeve, after platform installation, according to embodiments of the present disclosure. Here it can be seen that the connection part 14a of the platform 5 extends into the upwardly facing opening 15a of the sleeve. In fig. 12a, the connection part 14a extends through a lower opening of the connector part 15 too, as the sleeve is open at the bottom and hence comprises a through hole through which the connection part 12a can extend so that the free end 14a1 of the connection part 14a extends to a position outside the sleeve interior. The connection part 14a may comprise or be hook shaped or the like as e.g. illustrated with a downwardly facing free end 14a1.

In fig. 12b, the sleeve comprises a bottom wall 15z, and the free end 14a1 hence is maintained in the sleeve interior. The bottom wall 15z may in further embodiments comprise one or more drain openings for drainage of water (not illustrated). In some embodiments, the free end 14a1 may support at the bottom wall 15z after platform installation, in other embodiments, the free end 14a1 may be maintained with a distance to the bottom wall 15z after platform installation

Fig. 13 illustrates an schematically and in perspective installation of a platform 5 according to further embodiments of the present disclosure, where a platform 5 is installed by means of a connection arrangement 13 at the wind turbine. In fig. 13, the one or more connector parts 15 such as sleeve(s) may be hollow and here be arranged at the platform instead of on the wind turbine as illustrated in fig. 12.

Here, the connector parts 15 comprises a downwardly facing opening 15a into which an upwardly facing connection part 14a of a bracket at the wind turbine is arranged to extend after installation. Hence, the platform 5 may be installed by lowering the platform into/onto the connection part 14a by means of a crane from which the platform hangs, e.g. by means of wires or chains 80 or by another suitable device for use during installation of the platform at the wind turbine site.

In fig. 13, two connector parts 15 are placed above each other, and each comprising the sleeve such as a ring or pipe are placed at e.g. a side of the platform. These are each provided with the downwardly facing 15a opening configured to receive an upwardly facing connection part 14a that is firmly attached to the wind turbine. The upwardly facing connection part may e.g. be in the shape of a hook or the like as e.g. illustrated and comprises an upper free end 14a1 for extending into the downwardly facing opening 15a when lowering the platform 5 to be mounted on the wind turbine.

During installation, the platform 5 is lowered by a crane or the like, so that the upwardly facing connection parts 14a extends into the downwardly facing opening 15a as e.g. illustrated in fig. 13a.

Fig. 13a illustrates schematically a cross sectional view of the connector part 15 with a downwardly facing opening 15a receiving the connection part 14a after platform installation, according to embodiments of the present disclosure. It can be seen that the free end 14a1 extends into the opening 15a and that the sleeve encloses the part 14a. In fig. 13, the sleeve comprises an upper bottom wall 15z, this may cover the free end 14a1 partly (if it comprises one or more through holes) or fully (if the wall 15z is impermeable to water and thus comprises no through holes as illustrated in fig. 13a) after platform installation.

In further embodiments (not illustrated) the end wall 15z may substantially be omitted from the sleeve(s) 15 at the platform (fig. 13a and 13), and may comprise an upper opening through which the free end 14a1 also extends, e.g. like in fig. 12a.

In still further embodiments of the present disclosure, it is understood that the connection arrangement 13 may comprise a combination of the connection solutions illustrated in figs. 12 and 13, so that sleeves are both provided at the platform 5 and at the wind turbine, and the same applies for the connection part 14a, so that one or more fixed connection parts 14a at the platform comprises free ends 14a1 extending into upwardly facing openings of first types of sleeves (see fig. 12) at the wind turbine, and so that one or more other connection parts 14a at the wind turbine comprises free ends 14a1 extending into downwardly facing openings of sleeves at the platform.

The platform 5 hangs from/is suspended from the platform connection arrangement 13 in a system that may be considered a shelf support solution.

It is generally to be understood that in some embodiments of the present disclosure, further securing of the platform 5 to the wind turbine may be provided. This may e.g. comprise providing safety measures such as a locking system for ensuring that the connection parts cannot be lifted out of the sleeves by e.g. waves or sudden upward pushes on the platform from a crane or vessel. These safety measures may comprise installation of bolts or screws, pins or the like on the connection arrangement. Additionally or alternatively further safety measures (not illustrated) may be provided to enable installation of safety measures that are easily viewed and serviced when standing on the platform. For example, one or more sleeve and connection part solutions as already previously described may be provided within range of a user when the user stands on the platform, and this/these may facilitate installation of mechanical safety measures such as a locking system or the like that substantially prevents removing/lifting the platform 5 from the wind turbine again without unlocking and/or removing the safety measures. Hence, also after the platform is installed, a user may install/activate the safety measures to firmly secure the platform to the wind turbine.

It is generally to be understood that the service platform may be structurally fixed, such as mainly structurally fixed, to the wind turbine tower 3 or to the foundation arrangement (4) a by means of the platform connection arrangement(s). In the embodiments of figs. 12 and 13, the service platform 5 is structurally fixed, such as mainly structurally fixed, to the foundation arrangement, such as a transition piece or the like. Figs 12a, 12b and 13a suggests that the part(s) of the platform connection arrangement 13 at the wind turbine comprising the part(s) 14a, 15 to which the connection arrangement 14a, 15 of the platform is to be connected may be placed at the foundation arrangement 4 or the wind turbine tower 3 such as the wind turbine tower wall.

In some further embodiments (not illustrated), some parts of the platform connection arrangement may be placed at the tower 3 and other at the foundation arrangement 4, so that the platform is connected to both the foundation arrangement 4 and the wind turbine tower at/in the transition area 90 between the foundation arrangement and the tower. Such a transition area may e.g. comprise or be at opposing sides of flanges of the tower and foundation arrangement that interconnects the tower 3 and foundation arrangement 4.

It is understood that in other or additional embodiments of the present disclosure, the platform connection arrangement(s) 13 may additionally or alternatively comprise upper platform connection arrangements (not illustrated) that are located above the horizontal floor plane FP and connected to the wind turbine structure above the floor plane. One two, three, four or more of the upper platform connection arrangements may be provided in various embodiments of the present disclosure. This/these may be provided as an addition to, or an alternative to the "lower" platform connection arrangement(s) 13 illustrated in e.g. figs. 2 and/or 3. Such upper platform connection arrangements may in some embodiments be attached to the upper part of the support frame arrangement 7 of the service/working platform that extends above the level of the floor plane as e.g. previously described. In some embodiments of the present disclosure, a carrying structure 14 such as one or more rods, beams or the like of such upper platform connection arrangement(s), may be attached directly or indirectly to one or more of the support legs 8 of the support frame arrangement 7. In additional or other embodiments of the present disclosure, the carrying structure 14 of the upper platform connection arrangement(s) may be attached directly or indirectly to the uppermost, interconnecting beam 18 of the support frame arrangement 7 that extends between the support legs 8 and/or to the transverse support beam(s) 12 (not illustrated in fig. 19, see e.g. fig. 2) if present.

Hence, the female part (or male part - dependent on the connection arrangement solution, see e.g. figs, 12-13) is arranged at the wind turbine structure, such as the wind turbine tower 3 at a level above the support frame arrangement 7. The carrying structure hence extends from there and towards the frame arrangement 7 and hence, the platform hangs from the upper platform connection arrangement(s).

In certain embodiments of the present disclosure, the upper platform connection arrangement(s) may act as a primary support that takes/carries at least 50%, such as at least 60% or 70% of the weight of the platform (and the material/equipment loaded thereon/hanging therefrom).

In certain embodiments of the present disclosure, the upper platform connection arrangement(s) may act as a primary support that takes/carries between 50% and 100%, such as between 50% and 95% of the weight of the platform (and the material/equipment loaded thereon/hanging therefrom).

In other embodiments of the present disclosure, the upper platform connection arrangement(s) may act as a secondary support that takes/carries less than 45%, such as less than 35% of the weight of the platform (and the material/equipment loaded thereon/hanging therefrom). The lower platform connection arrangement may in these embodiments take up the remaining part of the platform weight/load.

The upper platform connection arrangement(s) may be configured so that the lower part of the platform arrangement 5, such as around the floor area of the platform, provides a substantially horizontal pressure force/ pressure force component towards the wind turbine structure, as this part of the platform so to say pivots towards the wind turbine structure due to the connection point of the upper platform connection arrangement(s) that is at the wind turbine structure, such as at the tower above the frame arrangement 7.

In some embodiments of the present disclosure, the part 15 of the upper connection arrangement that is attached to the wind turbine structure 3 may be placed at least 1.5 meters above the floor plane, such as at least 2 meters above the floor plane, for example at least 3 or 4 meters above the floor plane FP. In embodiments of the present disclosure, the part 15 of the upper connection arrangement that is attached to the wind turbine structure 3 may be placed between least 1 meter and 8 meters above the floor plane FP, such as between 2 meters and 6 meters above the floor plane FP.

In some embodiments of the present disclosure, the part 15 of the upper connection arrangement that is attached to the wind turbine structure 3 may be placed at least 0.5 meters above the uppermost part of the support frame arrangement 7, such as at least 1 meter or at least 1.5 meters above the uppermost part of the support frame arrangement 7,

In certain embodiments of the present disclosure, the above mentioned upper platform connection arrangement(s) may be placed between a horizontal upper plane that is defined by the uppermost part of the support frame arrangement 7, and the floor plane FP. A lower platform connection arrangement may also be placed below the floor plane FP, but this may also be omitted according to further embodiments of the present disclosure. The upper platform connection arrangement may be attached directly or indirectly to the support frame 7.

The upper platform connection arrangement(s) described above may preferably be of the of the type comprising a male connection part and a receiving bracket with an opening for receiving the male connection part as previously described, see e.g. also figs. 12-13a.

It is generally to be understood that the cross sectional shape of the opening 15a of the receiving bracket 15, such as the opening in a sleeve, may be circular or oval, or of another cross sectional shape such as a polygonal shape, e.g. rectangular, pentagonal or hexagonally shaped and/or the like. The cross sectional shape of the male part 14a may correspond to the cross sectional shape of the opening 15a, or may be different therefrom.

In some embodiments of the present disclosure, the male part 14a, or at least some or all of a plurality of male parts 14a, may extend at least 20cm, such as at least 40cm, such as at least 50 cm or 100 cm into the opening 15a after platform installation. In the embodiments of figs. 12 and 13, and e.g. also fig. 5 or other figures described above that may require that the platform arrangement is lowered at least 20cm, such as at least 40cm, such as at least 50 cm or 100 cm before the platform connection arrangements takes over the supporting of the platform arrangement so that it is suspended from the wind turbine structure, so that the lifting force provided by the lifting arrangement can be reduced (e.g. by further lowering a crane/lifting part that the wire or chain 80 is connected to), so that the platform arrangement (5) can be released from the platform lifting arrangement 80.

It is generally to be understood that in some embodiments of the present disclosure, the part of the platform connection arrangement 13 that is fixed at the wind turbine structure, such as the receiving bracket 15 or a bracket solution comprising the male part 14a may be welded, bolted or in other suitable ways securely attached to the wind turbine structure. This may e.g. be provided by welding or by means of bolts fixating the part to the wind turbine tower wall, or a wall of the foundation arrangement such as a transition piece wall or an annular skirt thereof. In other embodiments, the part may be welded or bolted to a connection flange connecting the wind turbine tower to the foundation arrangement such as a transition piece of the foundation arrangement,

The interior surface of side wall 15x, such as a sleeve wall, of the receiving bracket 15 that surrounds and faces the male part 14a may act as a guide for the male part 14a during the relative movement between the male connection part 14a and the receiving bracket 15 so that the male part 14a extends into said opening 15a to a position where the platform arrangement is suspended.

It is generally understood that the opening 15a may be partly or fully enclosed by a bracket side wall structure such as a sleeve wall.

In some embodiments of the present disclosure, a lubricant such as a natural or synthetic oil or the like may be provided at the interior of the bracket 15 and/or at the male part 14a so that the male part slides more easily into the opening.

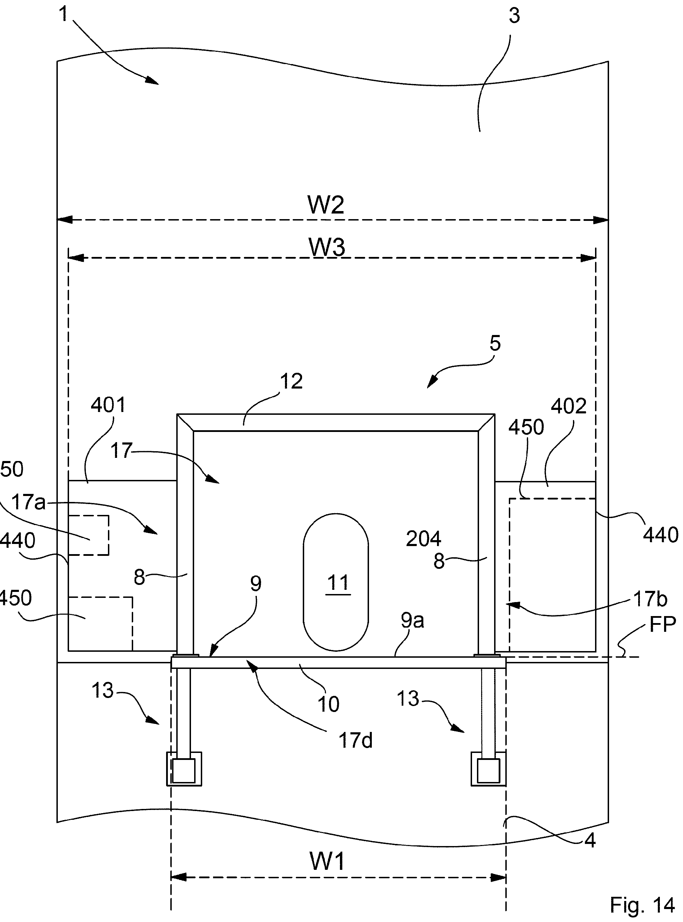

Fig. 14 illustrates schematically an offshore wind turbine 1 according to embodiments of the present disclosure, comprising a platform arrangement 5, such as the previously described service platform, with equipment containers 401, 402 attached thereto at platform sides 17a, 17b.

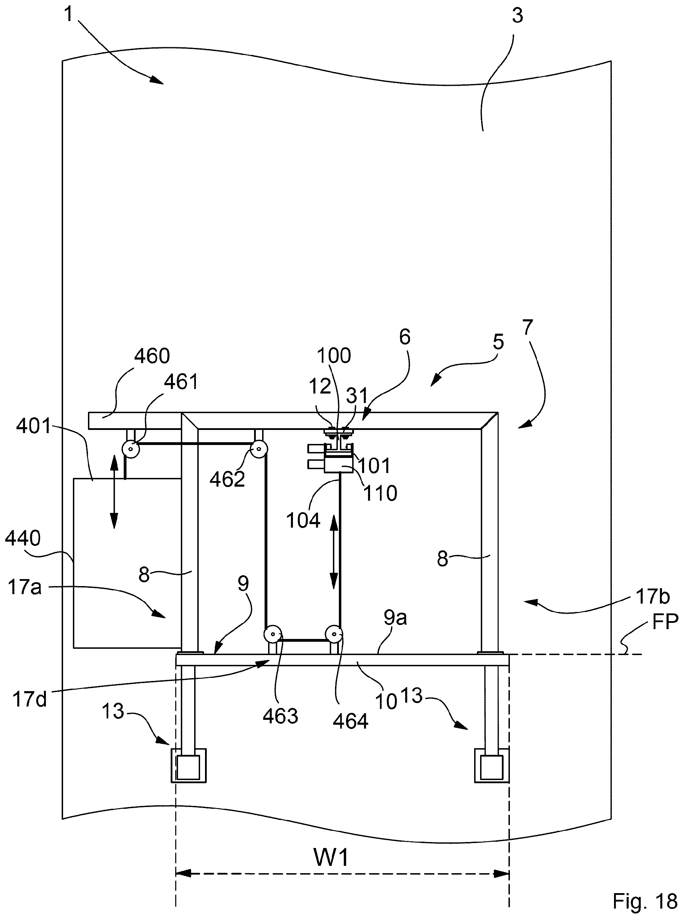

As illustrated in fig. 14, it is understood that the service crane arrangement 6 as e.g. described above in embodiments of the present disclosure may be omitted from the platform arrangement 5. In other embodiments of the present disclosure, the platform arrangement 5 may comprise a service crane arrangement 6 as previously described comprising one or more crane booms (100, 200) that may e.g. be attached to the support frame arrangement 7 of the service platform, such as to the support beams 12 above the floor plane FP, see also fig. 18. The crane arrangement 6 may hence comprise crane equipment such as one or more of winch(es), trolley(s) control system(s), flexible lifting medium(s) and or the like as previously described.

As can be seen, the platform arrangement 5 comprises a platform entrance 17 that may be arranged opposite to the wind turbine structure 3, 4 such as the tower or a foundation arrangement as e.g. previously described, at the distal platform side 17d. The platform arrangement also comprises sides 17a, 17b extending towards the wind turbine structure 3, 4. The sides 17a, 17b extends from a position proximate the entrance 17 side 17d of the platform comprising the edge 10 and towards the wind turbine structure to the proximal side 17c of the platform arrangement.

In fig. 14, two equipment containers 401, 402 are attached to the wind platform at opposing sides 17a, 17b of the platform, but it is understood that only one container may be attached to the platform arrangement, or more than two equipment containers may be attached to the platform arrangement 5 in further embodiments of the present disclosure. For example, several equipment containers 401, 402 may be arranged in continuation of each other (not illustrated) along a side 17a, 17b of the platform in embodiments of the present disclosure.

The equipment containers 401, 402 are detachably connected to the support frame arrangement 7 of the platform arrangement 5 by means of a container connection arrangement (described in more details below). This attachment provides that the respective equipment container 401, 402 is suspended at the support frame arrangement 7 at one of the sides 17a, 17b of the platform arrangement 5.

Access to the interior of the attached equipment containers 410, 411is provided from the platform arrangement 5 through an opening (not illustrated in fig. 14) in the equipment container 401, 402.

The equipment containers 401, 402 comprises an interior with equipment 450 for use at the wind turbine site.

In embodiments of the present disclosure, one or more of the attached equipment containers 401, 402 may be a service containers.

In some embodiments, service container may comprises a lavatory container. The lavatory container may e.g. comprise equipment 450 comprising one or more toilets and/or urinals, a shower facility, a washbasin and/or the like (not illustrated). The lavatory container may comprise a freshwater tank for providing water for the toilet or urinal, for a washbasin or tap and/or a bath facility, and a container for storing wastewater from e.g. toilet, bath and/or the like. The toilet and/or urinal may in some embodiments be a chemical toilet or urinal or another type of suitable portable toilet or urinal or so that there may be reduced or no need for freshwater for flushing the toilet.

In some embodiments, said one or more service containers 401, 402 may comprise a living and/or accommodation container. The living and/or accommodation container may in embodiments of the present disclosure comprise equipment 450 in the container interior comprising one or more of:
- one or more beds with mattress for sleeping or resting,
- one or more chairs or tables,
- one or more kitchen facilities such as comprising cooking equipment such as oven and/or hotplate(s) and/or cooling equipment such as refrigerator and/or freeze,
- Television/screen
- an office facility,
- Internet equipment such as router and/or gateway for providing internet connection for user devices of users in the living and accommodation container, e.g. through wireless or wired (in that case obtained from the wind turbine) connection.

For example, the same wind turbine location with one or more service containers installed may e.g. be used for temporary living and accommodation and/or lavatory during a service trip where several wind turbines of an offshore wind turbine are to be serviced. Service personnel may hence shuttle back and forth between the wind turbine comprising the service container(s), and other wind turbines. In other embodiments, the service container(s) may merely follow the service personnel around and installed at the different wind turbines to be serviced.

In one or more embodiments of the present disclosure, said lavatory container, and said living and/or accommodation container may be provided by the same container comprising both facilities/features.

It is understood that in some embodiments, several lavatory rooms each comprising toilet and/or shower and/or rooms for living and/or accommodation may be provided in the same equipment container. These rooms may be accessible by means of different doors in the container, and be separated by e.g. partition walls in order to enable improved privacy. Hence, for example, several rooms such as at least two or three rooms for living and accommodation may be provided in the same service container, e.g. together with a further lavatory room and/or kitchen room to be shared between persons having each their living and/or accommodation room assigned.

It is generally to be understood that in one or more embodiments of the present disclosure, one or more of the equipment containers 401, 402 may comprise a power supply arrangement (not illustrated). This may e.g. comprise a generator and/or battery for powering equipment of the equipment container. In some embodiments, power supply may be provided to the container by power (e.g. 110V, 230V or 400V AC) through a cable from the wind turbine installation where the container is installed, or such power may be used for recharging a battery of the container. Alternatively or additionally, a battery, e.g. charged by solar cells at the container, may be placed at the container for equipment container power supply. In case cable powered solution is provided, personnel may enter the platform after installation/attachment of the equipment container at the platform arrangement, and provide a power supply connection between a power outlet of the wind turbine and a power input, such as a socket, at or connected to the respective equipment container. In other embodiments, a power connection may be automatically be provided upon installation of the equipment container, so that a plug automatically engages with a power socket when the container connection arrangement engages.

In embodiments of the present disclosure, the equipment container may comprise a service container in the form of a spare part container comprising a plurality of spare parts (not illustrated) for use at the wind turbine to which the platform arrangement is attached. The spare part container may comprise different wind turbine components that may be used for replacement and/or retrofitting at the related wind turbine. The spare part container may comprise a plurality of different spare parts according to a predefined spare part list (that may e.g. be defined with spare parts suitable for a predetermined service task), so that service personnel can be assured that relevant spare parts are brought to the relevant wind turbine. Hence, before leaving the shore/harbour, the spare part container may be filled/refilled with the intended/relevant and/or listed spare parts, and then after arrival and installation/ temporary attachment at the wind turbine, the spare parts can be accessed from the platform. The spare part container may also comprise a plurality of spare parts that may generally be relevant at a wind turbine even though that these may not be known to be needed upon leaving harbour/shore. Hence, if service personnel discovers an inconvenience at the wind turbine that may be fixed by means of a new spare part, then there is an increased chance that such a spare part is available from the platform. Such equipment may e.g. comprise electronic equipment such as PCB's, relays, wires, switches or the like, or mechanical equipment for replacement at components of the wind turbine. Also, such spare parts may comprise parts that may induce an upgrade of features after installation at a wind turbine, so that if service personnel discovers older equipment at the wind turbine that may profit from an upgrade, they may decide to replace this with new spare part from the spare part equipment container.

In embodiments of the present disclosure, said one or more service containers may comprise a workshop container, such as comprising one or more hand tools and/or electrical tools such as meters and/or tools installed in and/or attached to the workshop container. This may comprise computer equipment, electronic diagnostics tools, hand tools, power tools and/or the like. In some embodiments, the workshop container may comprise tools in the form of equipment for data communication with the control system(s) of the wind turbine comprising the platform to which the workshop container is attached. Also or alternatively, the workshop container may comprise one or more working tables, drilling machine, turning lathe, a printer such as a 3D printer, a computer numerical control machine and/or the like.

The workshop container and the spare part container may in further embodiments be the same container.

In one or more embodiments of the present disclosure, the said one or more attached equipment containers 401, 402 may comprise a generator such as an emergency/ backup generator for providing electric power, e.g. during installation of the wind turbine or for power supply at a later stage such as during service at the wind turbine 1. In further embodiments of the present disclosure, several equipment containers comprising generators or sub-parts thereof may be attached to the frame arrangement 7, and interconnected either to provide a full generator solution for electric power supply, or to provide several generators coupled in parallel to assure sufficient power supply. The container(s) comprising a generator may also comprise a fuel tank, such as a fossil fuel or hydrogen or the like, to be used by the generator for generating electric power at the wind turbine site. Alternatively, an equipment container may be a dedicated fuel container to be installed at the platform for fuel supply to the generator(s) of other equipment containers. The fuel tank may be configured to be either refuelled from an external fuel vessel, and/or may be refuelled with e.g. hydrogen by means of an electrolyser system at the wind turbine, e.g. as described below at the platform arrangement in an equipment container, but the electrolyser for refuelling may also be placed at another location at the wind turbine such as inside the wind turbine tower or foundation arrangement.

The emergency/backup generator/generator system for providing electric power after installation be capable of providing a total maximum electric power output of at least 5 kW, such as at least 10 kW, such as at least 20kW, at least 40 kW or at least 60 kW.

In one or more embodiments of the present disclosure, the said one or more attached equipment containers 401, 402 may comprise a hydrogen production arrangement in the form of an electrolyser system configured to produce hydrogen by means of electric power generated by the offshore wind turbine to which the platform arrangement 5 is attached. Hence, after container installation at the platform, electric power may be connected from the wind turbine to the hydrogen production arrangement to enable hydrogen production by means of power generated by the wind turbine that the platform arrangement 5 is attached to.

Additionally or alternatively, the one or more attached equipment containers 401, 402 may comprise a hydrogen storage configured to store hydrogen produced for example at the location of the wind turbine to which the platform arrangement is attached, e.g. by a hydrogen production arrangement of another equipment container or the same equipment container attached to the platform arrangement 5. In some embodiments, a marine vessel may bring a new/other hydrogen storage or hydrogen production container, and hence replace this with the existing container at a platform arrangement. Then the replaced container may be brought to shore for repairs, upgrade and/or service.

In some embodiments of the present disclosure, the hydrogen storage may be used as filling station for e.g. marine vessels used during for example service and maintenance of the wind turbines or other nearby wind turbines, or it may be used as fuel other vessels.

In one or more embodiments of the present disclosure, said one or more attached equipment containers may comprise fuel cells for converting stored hydrogen into electricity. The generated electricity may in further embodiments be utilized by equipment in other equipment containers or in the same container, or may alternatively be transmitted through a cable to an onshore utility grid.

In embodiments of the present disclosure, said one or more attached equipment containers may comprise a data centre container configured to provide computer processing by means of electric power generated by the offshore wind turbine to which the platform arrangement is attached. It is here understood that the datacentre may comprise one or more data connection interfaces to be connected to a data communication medium such as wireless data communication, wired data communication (such as optical cable, coaxial cable or the like) for enabling receipt of data processing requests at the data centre and/or transmitting processed data from the data centre. The data centre system may comprises a plurality of servers, computer processors and/or the like enabling execution of data processing request representations transmitted from e.g. an onshore system to the data centre system of the equipment container, and also, transmittance of a result of the data processing may be provided from the data centre system to an onshore system by means of data processing result representations.

The overall width of the platform arrangement 5 and equipment container(s) may as illustrated be larger than the total maximum width W1 of the platform arrangement 5 itself. In some embodiments, the total width W3 of the platform arrangement 5 with one or more equipment containers 401, 402 attached to the support frame arrangement 7 thereof may in embodiments of the present disclosure be at least 10%, such as at least 30%, for example at least 50% larger than the maximum width W1 of the platform arrangement 5 itself. The size of the width W3 may depend on if an equipment container 401, 402 is attached at one or both platform sides 17a, 17b and/or on the width of the individual container 401, 402. The container width may depend on type of equipment container 401, 402 installed at/attached to the frame arrangement 7.

It is understood that the equipment container 401, 402 may be a 10 foot container, a 20 foot container, a 40 foot container or a container smaller in length and/or width than a 20 foot container or a 10 foot container. This may be dependent on the application of the container 401, 402. The container 401, 402 may e.g. be "general purpose container" adapted at the interior and/or exterior to fit the desired purpose/application, or may have other shapes or dimensions. The container walls may be made from steel, but in other embodiments, the container 401, 402 wall may be made from or comprise a plastic material a fibre material such as a fibre glass material, a wood material and/or the like, dependent on the application of the equipment container.

The platform floor 9 may be aligned with a door entrance 11 of the wind turbine to enable access to the interior of the wind turbine. Hence a person can access the interior of the wind turbine from the platform arrangement. In other embodiments of the present disclosure, it may not be possible to access the wind turbine interior from the platform, as a door 11 may e.g. not be accessible from the platform. This may e.g. be relevant in case the primary function of the platform arrangement 5 is to act as an adaptable platform for holding equipment containers 401, 402 of one or more types, such as e.g. disclosed above. For example for acting as a base for living and/or accommodation and/or as a base for hydrogen production and/or storage or for fuel cells or for a data centre.

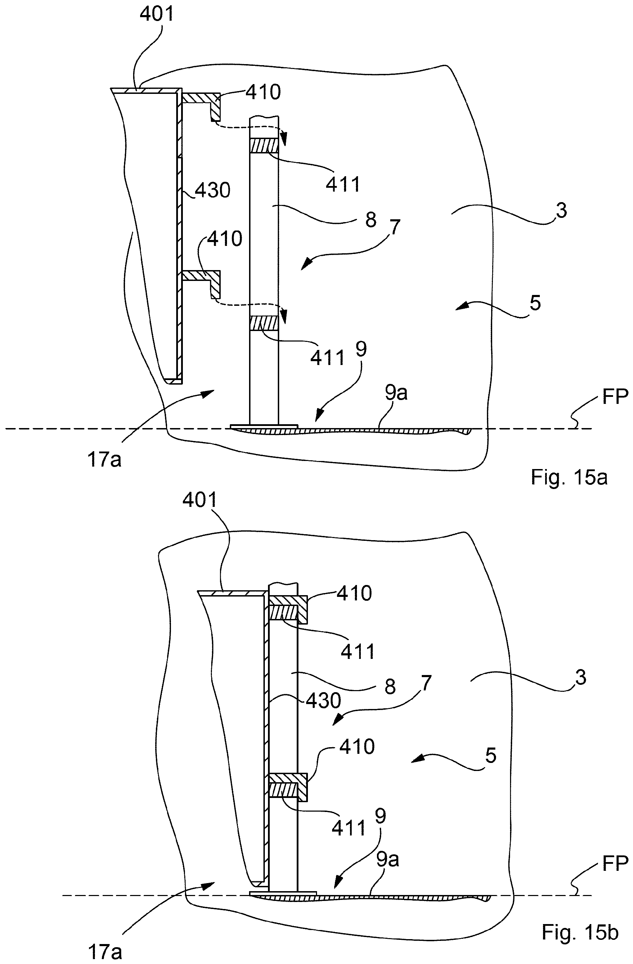

Figs. 15a-15b schematically illustrates connection operation for connecting an equipment container to the support frame arrangement 7 of the platform arrangement 5 by means of the container connection arrangement 410, 411, according to embodiments of the present disclosure.

As can be seen from figs. 15a-15b, the one or more equipment containers 401, 402 is/are attached by means of the container connection arrangement 410, 411 to one or more parts of the frame arrangement 7. This/these parts may e.g. comprise a beam 411, but may additionally or alternatively comprise one or more support legs 8, one or more transverse support beams 12, one or more parts of a railing arrangement 19 and/or an upper interconnecting beam 18, such as a girder, that interconnects a top part of the legs 8 (see e.g. fig. 2 and/or 3).

Generally, the one or more equipment containers 401, 402 may be attached to a part/parts of the support frame arrangement 7 that extends above the level of the floor plane (FP) of the platform floor 9, e.g. as illustrated in figs. 15a-15b.

In figs 15a-15b, a first part of the container connection arrangement (in the embodiment of figs. 15a-15c it is the parts 411) are structurally fixed to and/or comprised in the support frame arrangement 7. This part may e.g. comprise one or more beams 411 that are attached/fixated to one or more legs 8 of the frame arrangement 7. The beams may extend between and be attached to opposing surfaces of the legs 8. Alternatively the beams 411 may be attached or connected to a surfaces of the legs facing away from the other side 17b of the platform, or a side facing the platform side 17b.

In other embodiments, the part 411 may comprise brackets, hooks or the like that is/are attached to a leg 8 or beam 411, such as a horizontal beam, of the support frame 7.

The container 401 comprises hook shaped elements 410 of the container connection arrangement that comprises downwardly facing ends. The equipment container is hence placed at a side of the platform by means of a container lifting arrangement, such as an external container lifting arrangement (not illustrated) such as a crane or the like that may e.g. be arranged on the vessel bringing the equipment container to the wind turbine site and may be controlled therefrom. It is understood that alternatively, a first vessel may also comprise the lifting arrangement while another vessel may bring equipment containers from which the lifting equipment may lift/collect the equipment container(s).

The container lifting arrangement lifts the equipment container 401 to an upper position at a side 17a of the platform arrangement 5, then the equipment container 401 is moved to approach the platform arrangement side 17a and is then lowered as indicated by the dashed arrows of fig 15a, so that the hook shaped elements 40a engages with the engagement parts 411 at the support frame arrangement 7 as illustrated in fig. 15b.

After this, safety measures such as a mechanical locking system (not illustrated) may in further embodiments be installed and/or activated after the equipment container is attached to at the platform arrangement 5, to assure that the container cannot be removed from the platform by waves, or by other unexpected/undesired external forces. The locking system may then be removed or deactivated if/when the equipment container is to be moved again from the platform.

It is understood that in further embodiments, the hook shaped part may be placed at the support frame 7 and engagement parts 411, such as brackets, for engaging with the hook shaped parts may be placed at the container. In that case, the hook parts may comprise upwardly facing ends.

It is understood that one or a plurality of container connection arrangements 410, 411 may be provided for enabling a sufficient and safe attachment of an equipment container 401, 402 to the platform arrangement 5 frame arrangement 7. This may e.g. depend on one or more of size, type and/or weight of equipment container and/or the size and/or type of container connection arrangement 410, 411 utilized.

In some embodiments of the present disclosure (not illustrated in figs. 15a-15b), the container connection arrangement 410, 411 may comprise one or more connector parts comprising an upwardly or downwardly facing opening into which an end of a connection part of the container connection arrangement extend, such as a result of an installation process where the equipment container is lowered onto a connection solution fixed to and/or integrated in the support frame arrangement of the platform arrangement. This may e.g. be provided by means of a connection solution, such as a sleeve or pipe solution as previously described in relation to a embodiments of the platform connection arrangement 13, such as e.g. described in relation to one or more of figs. 12-13a and/or fig. 3.

As can be seen, the attached container may in some embodiments extend partly in over the floor/floor base structure of the platform arrangement. In other embodiments of the present disclosure, the attached container 401 may in not extend partly in over the floor/floor base structure of the platform arrangement. In further embodiments (not illustrated) a bottom part of the attached equipment container 401 may be placed below the floor plane FP of the platform, and the platform side wall 430 may hence extend through the floor plane FP.

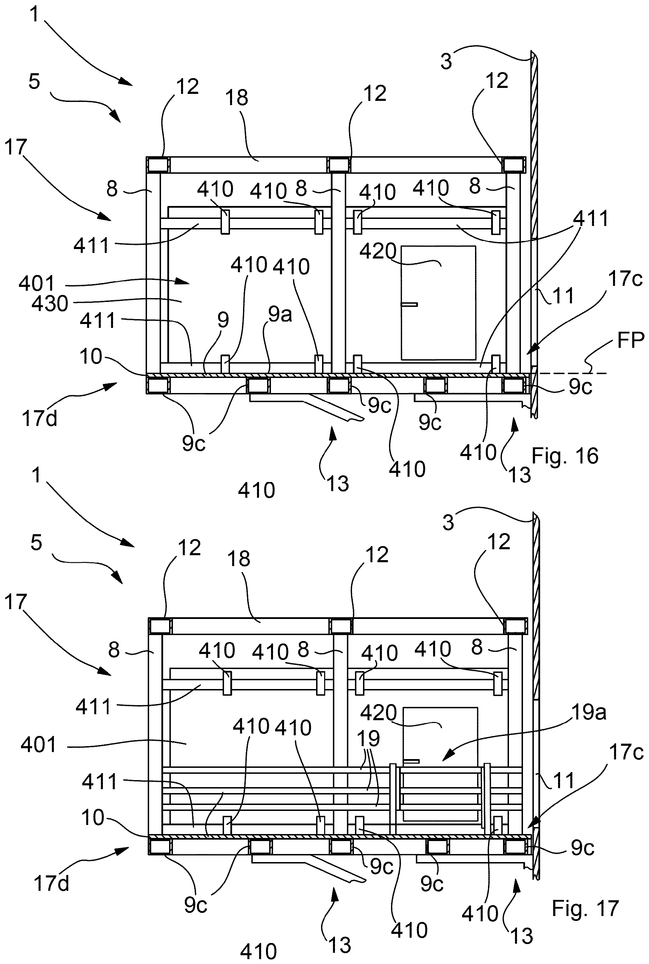

Fig. 16 illustrates schematically a cross sectional view of a platform arrangement according to embodiments of the present disclosure where an equipment container 401 is attached to the support frame arrangement 8 of the platform arrangement 5, seen from the platform side from a position above the floor surface, and towards the side wall 430 of the attached equipment container.

As can be seen, the side wall 430 facing the platform comprises an access opening 420 such as a door, in the equipment container 401. A person/personnel can enter into the interior of the container 401 through the opening 420 from a position at the platform floor 9 at the platform side of the container 401. Hence, after the container 401 has been connected/attached to the support frame arrangement 7, personnel may open the door covering the opening in the wall 430, and enter into the container interior. In some embodiments of the present disclosure, the opening 420 may be a door, e.g. if the container 401 is a service container such as a lavatory container or a living and/or accommodation container. In other embodiments, the wall may instead comprise one or more openings such as one or more hatches in the wall 430 through which service personnel may access parts in the interior of the container, without necessarily being able to enter into the container during normal use. This may depend on the size of the equipment container and/or the type of equipment container. It is understood that one or a plurality of doors 420 and/or one or a plurality hatches may be provided in the same wall 430.

Fig. 17 illustrates schematically a cross sectional view of a platform arrangement according to embodiments of the present disclosure, where an equipment container 401 is attached to the support frame arrangement 7 of the platform arrangement 5, seen from the platform side from a position above the floor surface, and towards the side wall 430 of the attached equipment container, and where a railing arrangement 19 is provided.

The railing arrangement 19 is arranged at a side 17a, 17b (see previous figures) of the platform arrangement 5. The railing arrangement 19 comprises a railing gate arrangement 19a that is openable in order to allow access to the attached equipment containers through the opening 420 in the attached equipment container. The railing gate arrangement may be connected by a hinge system to another part of the railing arrangement 19 or to another part of the support frame system 7, so that the gate arrangement 19a can be provided in a closed position, and an open position where a person can enter through a raining opening and into the opening 420 in the wall 430 of the container. Hence, in case an equipment container is not installed at a side of the platform arrangement 5, the railing arrangement 19 and the gate arrangement 19b prevents personnel from accidentally stepping or tripping out over the sides of the platform arrangement and into the water.

Fig. 18 illustrates schematically an embodiment of the present disclosure where a crane arrangement 6 of the platform arrangement 5, as previously described in relation to various embodiments of the present disclosure, and if present at the platform arrangement 5, may be used as container lifting arrangement for lifting and installing the equipment container(s) 401, 402. One or more guiding arrangements 461, 462, 463, 464 such as guiding pulleys, eyebolts, hooks or the like is/are provided for guiding a flexible lifting medium 104 of the crane arrangement 6 to a lifting position.

An upper side lifting beam 460 attached to the support frame arrangement 7 extends out over a side 17a of the platform at an upper portion of the frame arrangement. A first guiding arrangement 461, such as a pulley is carried by the side lifting beam 460 and guides the flexible lifting medium 104 above the equipment container. Further intermediate guiding arrangements 462, 463, 464 are attached to structures of the platform in order to guide the flexible lifting medium to a position below the crane trolley 101. Hence, by operating the winch 110 (that may be located at the trolley or at another location (see fig. 11)), the equipment container 401 can be lifted and lowered. A substantially similar solution may be provided at the other side 17b too in further embodiments.

The one or more guiding arrangements 461, 462, 463, 464 may be placed above or below the floor plane FP and be permanently arranged at the platform arrangement 5. In other embodiments, some of or all of the guiding arrangements 461, 462, 463, 464 may be detached and attached to the platform arrangement by means of a snap hook or another type of locking member so that a user/personnel can remove the guiding arrangement when not in use, but place it at a desired location when needed. That may e.g. be relevant in case a guiding arrangement, such as the pulleys 463, 464 is placed at a location where these may be in the way in other situations during other use at the platform. The platform arrangement may comprise connection eyes or other connection solutions for attaching the one or more guiding arrangements 461, 462, 463, 464 to the platform.

In fig. 18, four guiding arrangements 461, 462, 463, 464 are provided, but fewer or more may be used in other embodiments. For example, in case the trolley 101 is adapted to also allow the flexible lifting medium to extend from the trolley in a horizontal direction or at least a direction different from vertical, and that the crane arrangement 6 allows for forces provided by container 401 in that direction, the guiding arrangements 463, 464 may be omitted.

In fig. 18, four guiding arrangements 461, 462, 463, 464 are provided, but fewer or more may be used in other embodiments. For example, in case the trolley (and e.g. also the winch if present om the trolley) is adapted to also allow the flexible lifting medium to extend from the trolley in a horizontal direction or at least a direction different from vertical, and that the crane arrangement 6 in general allows for/is approved for handling forces provided by a container 401 in that direction, the guiding arrangements 462, 463 and/or 464 may be omitted. In other embodiments, one or more of e.g. guiding arrangement 461, 462, 463 may be omitted so that the flexible lifting medium may extend between guiding parts in an inclining manner in a direction different from horizontal and vertical.

As illustrated in fig. 18, the guiding arrangement 464 may provide that the flexible lifting medium 104 extends vertically below the trolley to provide that mainly vertical forces acts on the crane boom from the flexible lifting medium.

It is understood that the trolley may be displaced along the crane boom 100 to a proper position e.g. opposite the container to be lifted and/or above a guiding point of a guiding arrangement 464.

In some embodiments, the first guiding arrangement 461 may be displaceably arranged at the side lifting beam 460, and/or the side lifting beam may be displaceably arranged to allow displacement of the first guiding arrangement 461. This may be provided in order to enable moving the lifted container 401 towards and away from the platform, e.g. prior to attaching the container 401 to the support frame arrangement 7 by lowering the container, or after detaching the platform from the support frame arrangement 7 by lifting the container and before lowering the container to a position below the platform floor, e.g. onto a marine vessel.

In still further embodiments, the guiding arrangement(s) may be attached to the support frame arrangement at side or top parts of the frame arrangement such as at the transverse support beams 12, support legs 8 and/or an interconnecting beam 9 without necessarily extending towards the floor 9.

It is understood that in case the side lifting beam(s) 460 are provided, these may not be considered included when determining the maximum platform width W1. That maximum platform width W1 may be determined e.g. between opposing edges of the floor structure at the platform sides 17a, 17b as e.g. illustrated.

In fig. 18, it is illustrated that one winch is used for lifting the container 401. However, in some embodiments, in case the service crane arrangement 6 comprises more than one crane boom and trolley as e.g. previously described (see e.g. fig. 2 and 5), these may be used together for lifting the same equipment container. In that case, two side lifting beams may be provided with a distance to each other at the same platform side 17a, 17b, and a first flexible lifting medium 104 is guided by one or more first guiding arrangements 461, 462, 463, 464 to a first side lifting beam, whereas a second flexible lifting medium 204 (may be guided by other guiding arrangements to the other side lifting beams. In that case, a control system 300 as previously described may, in embodiments of the present disclosure, be configured to facilitate a "synchronized" control mode to enable synchronized lifting of an equipment container.

It is understood that in some embodiments, an equipment crane boom as e.g. previously described may be used for lifting the equipment container. In some embodiments, the personnel crane boom may be used for this purpose, e.g. together with using an equipment crane boom as e.g. previously described.

The present disclosure may moreover be described in relation to the following items:
1. An offshore wind turbine (1) comprising a nacelle (2), a tower (3) and a foundation arrangement (4), wherein the offshore wind turbine (1) comprises a platform arrangement (5) placed below the nacelle (2),
   wherein the platform arrangement (5) is structurally fixed to a structure (3, 4) of the wind turbine by means of one or more platform connection arrangements (13),
   wherein the platform arrangement (5) comprises a floor (9) comprising an upwardly facing floor surface (9a) for support of personnel on the platform arrangement (5), wherein the platform arrangement (5) comprises a first proximate side (17c) proximate the wind turbine structure and a second distal side (17d) arranged distal to the wind turbine structure, and platform sides (17a, 17b) extending from said distal side (17d) to said proximate side (17c),
   wherein one or more attached equipment containers (401, 402) is detachably suspended at a support frame arrangement (7) of the platform arrangement (5) by means of a container connection arrangement (410, 411) so that the equipment container (401, 402) hangs at one of said platform sides (17a, 17b) of the platform arrangement (5),
   wherein the equipment container (401, 402) comprises a first side wall (440) facing away from the platform arrangement (5), and a second side wall (430) facing the platform arrangement (5), and wherein an access opening (420) in the equipment container is placed in the second side wall (430).
2. An offshore wind turbine (1) according to item 1, wherein said container connection arrangement (440, 441) comprises one or more hook shaped connectors (410) at the equipment container which engages with one or more engagement parts (411) at the support frame arrangement (7).
3. An offshore wind turbine (1) according to item 1 or 2, wherein said container connection arrangement (440, 441) comprises one or more hook shaped connectors (410) at the support frame arrangement (7) which engages with one or more engagement parts (411) at the equipment container (401, 402).
4. An offshore wind turbine (1) according to item 2 or 3, wherein said one or more engagement parts comprises one or more engagement beams (411, 18, 19), such as horizontal engagement beams.
5. An offshore wind turbine (1) according to any of the preceding items, wherein said container connection arrangement (440, 441) is configured so that a lifting force acting on and lifting the attached equipment container (401, 402) upwards will detach the attached equipment container (401, 402) from the support frame arrangement (7).
6. An offshore wind turbine (1) according to any of the preceding items, wherein the one or more equipment containers (401, 402) is/are attached by means of the container connection arrangement (410, 411) to the support frame arrangement (7) above the level of the floor plane (FP) of the platform floor (9).
7. An offshore wind turbine (1) according to any of the preceding items, wherein said support frame arrangement (7) comprises support legs (8), such as vertical support legs, arranged at each of said platform sides (17a, 17b) extending from the distal side (17d) to said proximate side (17c) of the platform arrangement, and
   wherein the support legs (8) are interconnected by means of one or more transverse support beams (12) extending above the platform floor (9) between said sides (17a, 17b) of the platform arrangement (5).
8. An offshore wind turbine (1) according to any of the preceding items, wherein the platform arrangement (5) comprises a service crane arrangement (6), wherein one or more crane booms (100, 200) of the service crane arrangement (6) is/are suspended substantially horizontally from one or more support beams (12) of said support frame arrangement (7), such as said transverse support beams (12), at a distance above the upwardly facing floor surface (9a), and wherein the crane boom (100, 200) comprises a first, proximate boom part (100a, 200a) arranged proximate the structure (3, 4) of the wind turbine, and a second, distal boom part (100b, 200b) extending out over an outer edge (10) of the service platform (5) floor (9) at said second distal side (17d).
9. An offshore wind turbine (1) according to item 8, wherein the service crane arrangement (6) comprises:
   - a crane trolley (101, 201) configured to be displaced along a track (102, 202) in the longitudinal direction of the crane boom (100, 200) by means of a drive arrangement (103, 203),
   - a flexible lifting medium (104, 204) such as a wire, rope or chain,
   - a winch (110, 210) for winding and unwinding the flexible lifting medium (104, 204) and a drive unit (106, 206) for driving the winch,

   wherein the flexible lifting medium (104, 204) is connected to the crane trolley (101, 201) and a connection part (105, 205) suspended, so that the connection part is suspended from the crane trolley (101, 201),
   wherein the winch (110, 210) is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b), and
   wherein the winch (110, 210) is controllable so as to lift and lower the connection part to load and/or unload said equipment (50) and/or personnel (40) onto or from the service platform floor when the crane trolley (101, 201) is placed at said first proximate boom part (100b, 200b).
10. An offshore wind turbine (1) according to any of the preceding items, wherein a first equipment container (401) is attached at a first side (17a) of the platform arrangement (5), and wherein a second equipment container (402) is attached at a second, opposing side (17b) of the platform arrangement (5) so that both the first and second equipment containers (401, 402) are suspended from said support frame arrangement (7).
11. An offshore wind turbine (1) according to any of the preceding items, wherein the platform floor (9) is aligned with a door entrance (11) of the wind turbine, such as in the tower (3) or foundation arrangement (4), to enable access to the interior of the wind turbine.
12. An offshore wind turbine (1) according to any of the preceding items, wherein said one or more attached equipment containers (401, 402) comprises one or more service containers.
13. An offshore wind turbine (1) according to item 12, wherein said one or more service containers comprises a lavatory container, and/or wherein said one or more service containers comprises a living and/or accommodation container.
14. An offshore wind turbine (1) according to item 12 or 13, wherein said one or more service containers comprises a spare part container comprising a plurality of spare parts (450) for use at the wind turbine to which the platform arrangement is attached.
15. An offshore wind turbine (1) according to one or more of items 12, 13 or 14, wherein said one or more service containers comprises a workshop container, such as comprising one or more electrical tools (450), such as tools installed in and/or attached to the workshop container.
16. An offshore wind turbine (1) according to any of the preceding items, wherein said one or more attached equipment containers (401, 402) comprises a hydrogen production arrangement (450) configured to produce hydrogen by means of electric power generated by the offshore wind turbine (1) to which the platform arrangement is attached, and/or
   wherein said one or more attached equipment containers comprises a hydrogen storage (450) configured to store hydrogen produced at the location of the wind turbine to which the platform arrangement is attached.
17. An offshore wind turbine (1) according to any of the preceding items, wherein said one or more attached equipment containers (401, 402) comprises a generator system (450), or parts (450) of a generator, for providing electric power, such as for use during installation of the wind turbine and/or for power supply during service at the wind turbine (1).
18. An offshore wind turbine (1) according to any of the preceding items, wherein the platform arrangement (5) has a maximum width (W1) extending horizontally and in a direction transverse to the longitudinal direction of the tower (3) wherein the maximum width (W1) of the platform arrangement is smaller than the width (W2), such as smaller than the diameter, of the tower (3) and/or foundation arrangement (4), at least at the location opposite to the platform arrangement (5).
19. An offshore wind turbine (1) according to any of the preceding items, wherein the total width (W3) of the platform arrangement (5) and one or more equipment containers (401, 402) attached thereto is at least 10%, such as at least 30%, for example at least 50% larger than the maximum width (W1) of the platform arrangement (5).
20. An offshore wind turbine (1) according to any of the preceding items, wherein the service platform (5) is configured to carry a rated, certified total external weight, such as provided by personnel (4) and/or equipment (50, 141, 142), of no more than 8 ton, such as no more than 5 ton, such as no more than 3 ton.
21. An offshore wind turbine (1) according to any of the preceding items, wherein the platform arrangement comprises a railing (19) arranged at a side of the platform, wherein the railing comprises a railing gate arrangement (19a) that is openable in order to allow access to the attached equipment containers through the opening (420) in the attached equipment container.
22. An offshore wind turbine (1) according to any of the preceding items, wherein the platform connection arrangement (13) comprises one or more connector parts (15) comprising an upwardly or downwardly facing opening (15a) into which an end (14a1) of a connection part (14) of the platform connection arrangement (15) extend, such as as a result of an installation process where the platform is lowered onto a connection solution (15, 14a) fixed to the wind turbine structure (4, 3).
23. An offshore wind turbine (1) according to any of the preceding items, wherein the container connection arrangement (410, 411) comprises one or more connector parts comprising an upwardly or downwardly facing opening into which an end of a connection part (410, 411) of the container connection arrangement extend, such as a result of an installation process where the equipment container is lowered onto a connection solution (410, 411) fixed to and/or integrated in the support frame arrangement (7) of the platform arrangement (5).
24. A method of adapting a platform arrangement (5) at an offshore wind turbine with one or more equipment containers (401, 402), wherein the offshore wind turbine (1) comprises a nacelle (2) mounted on a tower (3), wherein said tower (3) supports on a foundation arrangement (4),
   wherein the platform arrangement (5) comprises a floor (9) comprising an upwardly facing floor surface (9a) for support of personnel on the platform, and wherein the platform arrangement (5) is structurally fixed to the wind turbine at a location below the nacelle (2) and above the water level,
   wherein the platform arrangement (5) comprises a first side (17c) proximate the wind turbine and a second distal side (17d) arranged distal to the wind turbine, and
   platform sides (17a, 17b) extending from said distal side (17d) to said proximate side (17c), wherein the method comprises the steps of:
      - approaching the offshore wind turbine comprising the platform arrangement (5) by means of a vessel, such as a marine vessel, wherein the vessel is loaded with one or more equipment containers for installation at the platform arrangement (5),
      - lifting an equipment container (401, 402) by means of a lifting arrangement to a position at one of said sides (17a, 17b) extending from said distal side (17d) to said proximate side (17c),
      - attaching the lifted equipment container to a support frame arrangement (7) of the platform arrangement by means of a container connection arrangement (410, 411), so that the equipment is suspended at a side of the platform arrangement (5),
   wherein said equipment container is arranged so that a container wall (430) comprising an access opening (420) of the lifted equipment container faces said platform arrangement (5).
25. A method according to item 24, wherein the method comprises lowering the lifted equipment container so that one or more hook shaped equipment connectors of the container connection arrangement (410, 411) engages with a receiving part, thereby providing that the lifted equipment container is suspended at the side of the platform arrangement (5).
26. A method according to item 24 or 25, wherein said container connection arrangement (440, 441) comprises one or more hook shaped connectors (410) at the equipment container which engages with one or more engagement parts (411) at the support frame arrangement (7), and/or
   wherein said container connection arrangement (440, 441) comprises one or more hook shaped connectors (410) at the support frame arrangement (7) which engages with one or more engagement parts (411) at the equipment container (401, 402).
27. A method according to any of items 24-26, wherein the equipment container is lowered so that parts of the container connection arrangement (440, 441) engages so that the lifted equipment container is suspended at the side of the platform arrangement (5),.
28. A method according to any of items 24-27, further comprising the steps of:
   - lifting a further equipment container (401, 402) by means of a lifting arrangement to a position at another opposing side (17a, 17b) of the platform arrangement, and
   - connecting the lifted further equipment container to the support frame arrangement (7) of the platform arrangement (5) by means of a further container connection arrangement (410, 411) so that the further equipment container is suspended at the opposing side of the platform arrangement (5), and so that a container wall (430) comprising an access opening (420) of the further equipment container faces said platform arrangement (5).
29. A method according to any of items 24-28, wherein said equipment container (401, 402) is or comprises a service container such as:
   a lavatory container,
   a living and/or accommodation container,
   a spare part container comprising a plurality of spare parts for use at the wind turbine to which the platform arrangement is attached and/or
   a workshop container, such as comprising one or more electrical tools, such as tools installed in and/or attached to the workshop container.
30. A method according to any of items 24-29, further comprising the steps of
   - detaching one or more equipment containers (401, 402) from the platform arrangement (5) by means of a lifting arrangement after a service task at the wind turbine has been executed, and
   - placing the one or more equipment containers (401, 402) at a vessel such as a marine vessel.
31. A method according to item 30, wherein the lifting arrangement provides a lifting force so that the equipment container is moved upwards, thereby providing that the container connection arrangement (440, 441) detaches the equipment container (401, 402) from the support frame arrangement (7).
32. A method according to any of items 24-31, wherein said lifting arrangement comprises a service crane arrangement (6) arranged at the platform arrangement (5).
33. A method according to item 32, wherein one or more crane booms (100, 200) of the service crane arrangement (6) is/are suspended substantially horizontally from one or more support beams (12) of said support frame arrangement (7), such as transverse support beams (12), at a distance above the upwardly facing floor surface (9a), and wherein the crane boom (100, 200) comprises a first, proximate boom part (100a, 200a) arranged proximate the structure (3, 4) of the wind turbine, and a second, distal boom part (100b, 200b) extending out over an outer edge (10) of the service platform (5) floor (9) at said second distal side (17d).
34. A method according to item 33, wherein the service crane arrangement (6) comprises:
   - a crane trolley (101, 201) configured to be displaced along a track (102, 202) in the longitudinal direction of the crane boom (100, 200) by means of a drive arrangement (103, 203),
   - a flexible lifting medium (104, 204) such as a wire, rope or chain,
   - a winch (110, 210) for winding and unwinding the flexible lifting medium (104, 204) and a drive unit (106, 206) for driving the winch,

   wherein the flexible lifting medium (104, 204) is connected to the crane trolley (101, 201) and a connection part (105, 205) suspended, so that the connection part is suspended from the crane trolley (101, 201),
   wherein the winch (110, 210) is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b), and
   wherein the winch (110, 210) is controllable so as to lift and lower the connection part to load and/or unload said equipment (50) and/or personnel (40) onto or from the service platform floor when the crane trolley (101, 201) is placed at said first proximate boom part (100a, 200a).
35. A method according to any of items 37, wherein one or more guiding arrangements (461-464), such as one or more pulleys, guides the flexible lifting medium (104, 204) from the winch (110, 210 to a position above the lifted equipment container (401, 402), such as so that a connection part (105) for connecting the lifted equipment container (401, 402) to the flexible lifting medium is placed at a location above the lifted equipment container (401, 402).
36. A method according to any of items 24-35, wherein said method provides an offshore wind turbine (1) comprising one or more equipment containers (401, 402) according to any of items 1-23.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

### List

- 1: : Offshore wind turbine
- 2: : Nacelle
- 2a: : Hub
- 2b: : Wind turbine blade
- 3: : Tower
- 3a: : Tower wall or foundation arrangement wall, such as transition piece wall
- 4: : foundation arrangement
- 5: : Service platform
- 6: : Crane arrangement
- 7: : Support frame arrangement of service platform
- 8: : Vertical support arrangements such as comprising one or more support legs
- 9: : Service platform floor
- 9a: : Upwardly facing surface of service platform flooring
- 9b: : Floor girder
- 9c: : Transverse, horizontal floor beams beneath flooring
- 10: : Outer edge, such as outermost, edge of service platform
- 11: : Door entrance
- 12: : Transverse support beams
- 13: : Platform connection arrangement
- 14x, 14z: : Carrying structure, such as connection leg, of platform connection arrangement
- 14a: : Connection part of platform connection arrangement
- 14a1: : Free end of connection part
- 15: : Connector part, such as a bracket, such as comprising sleeve, of platform connection arrangement
- 15a: : Opening of connector part for receiving connection part.
- 17: : Platform entrance opening
- 17a, 17b: : Platform side extending from distal platform side to proximate platform side
- 17c: : Proximate platform side arranged proximate the wind turbine
- 17d: : Distal platform side arranged distal to the wind turbine
- 18: : interconnecting beam between support legs
- 19: : Railing arrangement
- 20: : Personnel lifting equipment
- 30: : Marine vessel
- 31: : Crane boom bracket
- 32: : Floor side parts
- 33: : Recess space
- 40: : Personnel to be lifted by crane arrangement
- 50: : Equipment to be lifted by crane arrangement
- 60: : Weather shield such as minor roof or housing.
- 80: : Connection for crane or the like during platform installation
- 90: : Transition area between foundation arrangement and tower
- 91: : Cable, such as power supply for drive arrangement
- 93: : Wall opening
- 94: : Pulley
- 100: : First, fixed crane boom
- 101: : First Crane trolley
- 102: : Track of first crane boom
- 103: : First drive arrangement for displacing first crane trolley
- 104, 204: : Flexible lifting medium such as a wire, rope or chain,
- 105, 205: : Connection part connected to flexible lifting medium
- 106, 206: : Drive unit such as electric motor for driving winch
- 110: : First lifting arrangement
- 200: : Second, fixed crane boom
- 201: : Second crane trolley
- 202: : Track of second crane boom
- 203: : Second drive arrangement for displacing second crane trolley
- 210: : Second lifting arrangement
- 300: : Control system
- 310: : Controller
- 320: : Remote control
- 401, 402: : Equipment container attached to platform arrangement
- 410, 411: : Container connection arrangement
- 420: : Opening in equipment container
- 430: : Major container wall facing platform arrangement
- 440: : Major container wall facing away from platform arrangement
- 450: : Equipment in equipment container.
- 460: : Side lifting beam
- 461-464: : guiding arrangements for guiding flexible lifting medium
- HI: : Interior platform height
- W1: : Max. platform width
- W2: : Tower or foundation arrangement width.
- W3: : Total width of platform arrangement and equipment container(s)
- POS1: : First position above service platform floor
- POS2: : Second position beyond edge of service platform
- CP: : Computer processor
- DS: : Data storage

## Claims

1. An offshore wind turbine (1) comprising a nacelle (2), a tower (3) and a foundation arrangement (4), wherein the offshore wind turbine (1) comprises a platform arrangement (5) placed below the nacelle (2),
wherein the platform arrangement (5) is structurally fixed to a structure (3, 4) of the wind turbine by means of one or more platform connection arrangements (13),
wherein the platform arrangement (5) comprises a floor (9) comprising an upwardly facing floor surface (9a) for support of personnel on the platform arrangement (5),
wherein the platform arrangement (5) comprises a first proximate side (17c) proximate the wind turbine structure (3, 4) and a second distal side (17d) arranged distal to the wind turbine structure, and platform sides (17a, 17b) extending from said distal side (17d) to said proximate side (17c),
wherein one or more attached equipment containers (401, 402) is detachably suspended at a support frame arrangement (7) of the platform arrangement (5) by means of a container connection arrangement (410, 411) so that the equipment container (401, 402) hangs at one of said platform sides (17a, 17b) of the platform arrangement (5),
wherein the equipment container (401, 402) comprises a first side wall (440) facing away from the platform arrangement (5), and a second side wall (430) facing the platform arrangement (5), and wherein an access opening (420) in the equipment container is placed in the second side wall (430).

2. An offshore wind turbine (1) according to claim 1, wherein said container connection arrangement (440, 441) comprises one or more hook shaped connectors (410) at the equipment container which engages with one or more engagement parts (411) at the support frame arrangement (7).

3. An offshore wind turbine (1) according to claim 1 or 2, wherein said container connection arrangement (440, 441) comprises one or more hook shaped connectors (410) at the support frame arrangement (7) which engages with one or more engagement parts (411) at the equipment container (401, 402).

4. An offshore wind turbine (1) according to any of the preceding claims, wherein said container connection arrangement (440, 441) is configured so that a lifting force acting on and lifting the attached equipment container (401, 402) upwards will detach the attached equipment container (401, 402) from the support frame arrangement (7).

5. An offshore wind turbine (1) according to any of the preceding claims, wherein the one or more equipment containers (401, 402) is/are attached by means of the container connection arrangement (410, 411) to the support frame arrangement (7) above the level of the floor plane (FP) of the platform floor (9).

6. An offshore wind turbine (1) according to any of the preceding claims, wherein said support frame arrangement (7) comprises support legs (8), such as vertical support legs, arranged at each of said platform sides (17a, 17b) extending from the distal side (17d) to said proximate side (17c) of the platform arrangement, preferably wherein the support legs (8) are interconnected by means of one or more transverse support beams (12) extending above the platform floor (9) between said sides (17a, 17b) of the platform arrangement (5).

7. An offshore wind turbine (1) according to any of the preceding claims, wherein the platform arrangement (5) comprises a service crane arrangement (6), wherein one or more crane booms (100, 200) of the service crane arrangement (6) is/are suspended substantially horizontally from one or more support beams (12) of said support frame arrangement (7), such as said transverse support beams (12), at a distance above the upwardly facing floor surface (9a), and wherein the crane boom (100, 200) comprises a first, proximate boom part (100a, 200a) arranged proximate the structure (3, 4) of the wind turbine, and a second, distal boom part (100b, 200b) extending out over an outer edge (10) of the service platform (5) floor (9) at said second distal side (17d).

8. An offshore wind turbine (1) according to claim 7, wherein the service crane arrangement (6) comprises:
- a crane trolley (101, 201) configured to be displaced along a track (102, 202) in the longitudinal direction of the crane boom (100, 200) by means of a drive arrangement (103, 203),
- a flexible lifting medium (104, 204) such as a wire, rope or chain,
- a winch (110, 210) for winding and unwinding the flexible lifting medium (104, 204) and a drive unit (106, 206) for driving the winch,
wherein the flexible lifting medium (104, 204) is connected to the crane trolley (101, 201) and a connection part (105, 205) suspended, so that the connection part is suspended from the crane trolley (101, 201),
wherein the winch (110, 210) is controllable so as to lift and lower the connection part between an upper position located above a floor plane (FP) defined by the upper floor surface (9a), and a lower position (POS3) placed below the floor plane (FP) in order to allow loading or unload service equipment (50) and/or personnel (40) connected to the connection part (105, 205) onto or from a marine vessel (30) when the crane trolley (101, 201) is placed at said second, distal boom part (100b, 200b), and
wherein the winch (110, 210) is controllable so as to lift and lower the connection part to load and/or unload said equipment (50) and/or personnel (40) onto or from the service platform floor when the crane trolley (101, 201) is placed at said first proximate boom part (100b, 200b).

9. An offshore wind turbine (1) according to any of the preceding claims, wherein a first equipment container (401) is attached at a first side (17a) of the platform arrangement (5), and wherein a second equipment container (402) is attached at a second, opposing side (17b) of the platform arrangement (5) so that both the first and second equipment containers (401, 402) are suspended from said support frame arrangement (7).

10. An offshore wind turbine (1) according to any of the preceding claims, wherein said one or more attached equipment containers (401, 402) comprises one or more service containers.

11. An offshore wind turbine (1) according to claim 10, wherein said one or more service containers comprises a lavatory container, and/or wherein said one or more service containers comprises a living and/or accommodation container.

12. An offshore wind turbine (1) according to any of the preceding claims, wherein said one or more attached equipment containers (401, 402) comprises a generator system (450), or parts (450) of a generator, for providing electric power, such as for use during installation of the wind turbine and/or for power supply during service at the wind turbine (1).

13. An offshore wind turbine (1) according to any of the preceding claims, wherein the floor (9) is aligned with a door entrance (11) of the wind turbine, preferably in a tower (3) or foundation arrangement (4) of the wind turbine, to enable access to the interior of the wind turbine from the platform.

14. A method of adapting a platform arrangement (5) at an offshore wind turbine with one or more equipment containers (401, 402), wherein the offshore wind turbine (1) comprises a nacelle (2) mounted on a tower (3), wherein said tower (3) supports on a foundation arrangement (4),
wherein the platform arrangement (5) comprises a floor (9) comprising an upwardly facing floor surface (9a) for support of personnel on the platform, and wherein the platform arrangement (5) is structurally fixed to the wind turbine at a location below the nacelle (2) and above the water level,
wherein the platform arrangement (5) comprises a first side (17c) proximate the wind turbine and a second distal side (17d) arranged distal to the wind turbine, and platform sides (17a, 17b) extending from said distal side (17d) to said proximate side (17c), wherein the method comprises the steps of:
- approaching the offshore wind turbine comprising the platform arrangement (5) by means of a vessel, such as a marine vessel, wherein the vessel is loaded with one or more equipment containers for installation at the platform arrangement (5),
- lifting an equipment container (401, 402) by means of a lifting arrangement to a position at one of said sides (17a, 17b) extending from said distal side (17d) to said proximate side (17c),
- attaching the lifted equipment container to a support frame arrangement (7) of the platform arrangement by means of a container connection arrangement (410, 411), so that the equipment is suspended at a side of the platform arrangement (5),
wherein said equipment container is arranged so that a container wall (430) comprising an access opening (420) of the lifted equipment container faces said platform arrangement (5).

15. A method according to claim 14, wherein the method comprises lowering the lifted equipment container so that one or more hook shaped equipment connectors of the container connection arrangement (410, 411) engages with a receiving part, thereby providing that the lifted equipment container is suspended at the side of the platform arrangement (5).
